# EUROPEAN PATENT APPLICATION

(11) **EP 4 553 429 A1**
(43) Date of publication of application: **14.05.2025**
(21) Application number: 23907208.5
(22) Date of filing: 22.12.2023
(51) Int. Cl.: F25D 17/06, A01N 1/02, A23L 3/36, F25D 16/00, F28C 3/08

(54) **TISSUE COOLING DEVICE**

(30) Priority: 22.12.2022 WO PCT/JP2022/047486
(71) Applicant: Xen Group Inc., Takamatsu-shi, Kagawa 761-0450 (JP)
(72) Inventor: NAGOSHI, Kazunori, Takamatsu-shi, Kagawa 761-0450 (JP)
(74) Representative: Plougmann Vingtoft a/s
(86) International application number: PCT/JP2023/046264
(87) International publication number: WO 2024/135848

(57) **Abstract**

A tissue cooling device capable of appropriately preserving an object to be cooled while keeping quality of the same is provided.

The tissue cooling device includes: a first cooler having a function of generating first cold air; and a second cooler to which gas is supplied from the first cooler, the second cooler adjusting the gas to form second cold air, wherein the second cooler includes: a heat exchanger having a surface to be in contact with the gas supplied from the first cooler; and an adjustment substance supply unit configured to supply an adjustment substance for adjusting a temperature of the heat exchanger to the surface of the heat exchanger, wherein the adjustment substance supplied from the adjustment substance supply unit has a freezing point higher than a temperature of the first cold air.

## Description

### TECHNICAL FIELD

The present invention relates to a tissue cooling device. More particularly, the present invention relates to a tissue cooling device that controls an object to be cooled such as food at a predetermined temperature.

### BACKGROUND ART

As a method for keeping quality of foods such as fresh foods, a method that stores foods in a device such as a refrigerator has been mainly used. This method keeps a temperature (hereinafter may be referred to as environmental temperature) of gas inside the device in which foods are stored at low temperature, thereby keeping a temperature of the foods low to prevent the foods from deteriorating.

A conventional refrigerator or the like generally supplies cold air at low temperature into the device (a space in which foods are stored) to keep environmental temperature inside the device at a predetermined temperature. Specifically, the refrigerator or the like includes a temperature sensor to detect the environmental temperature inside the device, and is controlled to stop cooling operation to stop supplying the cold air into the device when a temperature detected by this temperature sensor reaches a set temperature, and thereafter resume the cooling operation to resume the supply of the cold air into the device when the environmental temperature inside the device increases and the temperature detected by the temperature sensor becomes higher than the set temperature. That is, in the conventional refrigerator or the like, the cooling operation to cool the inside of the device (i.e. supplying and stopping of the cold air) is performed by a circulation cycle (i.e. ON-OFF control). In the case of such control, temperature fluctuation of gas inside the device, which is in contact with foods, occurs. According to the knowledge obtained by the present inventor, fluctuation of the environmental temperature inside the device, such as conventional refrigerators and cooling devices, becomes equal to or greater than 4°C, affecting quality of foods.

As a technique to solve such problem, the technique of Patent Literature 1 has been developed. The temperature management device of Patent Literature 1 includes: a storage unit that stores a temperature management target; a basic cold air generation unit that generates basic cold air having a lower temperature than a target temperature; a cold air temperature change unit that changes the basic cold air into target temperature cold air having the target temperature of about 0 degrees Celsius, which is higher than a freezing temperature of the temperature management target and is appropriate for storage; an ice crushing unit that produces crushed ice and supplies the crushed ice to the cold air temperature change unit; a first blower that sends the basic cold air generated by the basic cold air generation unit to the cold air temperature change unit; and a second blower that sends the target temperature cold air generated by the cold air temperature change unit to the storage unit to fill the storage unit. Further, the cold air temperature change unit includes a cylindrical heat exchanger body (i.e. a heat exchanger body with an axis in a vertical direction) that has an opening at the top, a crushed ice passing space formed in the interior space, and holes on the side, and employs a configuration where the crushed ice is supplied from the ice crushing unit to the crushed ice passing space and the basic cold air sent from the first blower is brought into contact with the crushed ice in the crushed ice passing space to generate the target temperature cold air.

With this configuration, it is possible to cool the temperature management target by contacting the temperature management target with the target temperature cold air having the target temperature of about 0 degrees Celsius, which is higher than the freezing temperature of the temperature management target and is appropriate for storing the temperature management target. This has an effect of appropriately preserving the temperature management target while keeping quality thereof, without freezing water and forming ice in the temperature management target.

Similar to the above-described technique of Patent Literature 1, a technique utilizing ice for keeping a temperature inside a food storage at about 0 degrees Celsius has been disclosed in Patent Literature 2. Patent Literature 2 discloses that the inside of the storage is kept at about 0 degrees Celsius by circulating gas in the storage through an evaporator. Specifically, in Patent Literature 2, the gas inside the storage is sent to a temperature adjuster as first airflow and the temperature thereof is adjusted to be -5 to -10°C, and then the first airflow is introduced into a cold-air temperature-humidity change unit and returned to the storage as second airflow having a temperature near 0°C. Further, it is disclosed that the cold-air temperature-humidity change unit includes a cylindrical heat exchanger (i.e. an axis in a vertical direction (z-axis direction)) with an opening at the upper portion and holes formed in the side walls, and crushed ice is supplied to this cylindrical heat exchanger, so that once the first airflow comes in contact with the heat exchanger or the crushed ice, it can be formed into the second airflow having a desired temperature and humidity.

Furthermore, Patent Literature 3 discloses a humidifying device for humidifying the inside of a refrigerator, the humidifying device humidifying air adjusted to -18 to 0°C in a cooling unit. It is disclosed that this humidifying device forms an ice pillar on a surface of an ice block forming unit extending in an up-and-down direction, and contact between this ice pillar and the air adjusted to -18 to 0°C leads to humidification of the air.

### CITATION LIST

### PATENT LITERATURE

Patent Literature 1: Japanese Unexamined Patent Application Publication No. 2018-162967
Patent Literature 2: WO 2022/102674 A1
Patent Literature 3: Japanese Unexamined Patent Application Publication No. 2022-26047

### SUMMARY OF INVENTION

### TECHNICAL PROBLEM

Thus, regarding second gas (the target temperature cold air or the second airflow) supplied to the space in which food or the like are stored in the techniques of Patent Literatures 1 and 2, it is disclosed that first gas (the target temperature cold air or the first airflow) is brought into contact with the cylindrical heat exchanger body or the side walls of the heat exchanger or brought into contact with the crushed ice through the holes in the side walls so as to be adjusted to the temperature of the second gas. However, since the holes formed in the side walls are small, it is practically difficult to contact the first gas with the crushed ice through the holes in the side walls, and the first gas actually comes in contact with only the heat exchanger body or the side walls of the heat exchanger, making it difficult to appropriately adjusting the temperature of the second air as described in Patent Literatures 1 and 2.

Furthermore, the humidifying device of Patent Literature 3 forms an ice pillar and contacts this ice pillar with gas, where the ice block is formed from supercooled water and appropriate management of the temperature thereof is difficult. Therefore, although the humidifying device of Patent Literature 3 can increase the humidity of the gas to be supplied, it is difficult to appropriately adjust the temperature of the gas that is in contact with the ice block.

As described above, the techniques of Patent Literatures 1 to 3 can control a temperature of gas to be within a certain temperature range by contacting the gas with the heat exchanger body, the heat exchanger, or the ice block, thereby cooling food, etc. However, it is difficult for the techniques of Patent Literatures 1 to 3 to form cooling environment capable of keeping quality of food, etc. during cooling the food, etc.

In view of the above circumstances, the present invention aims to provide a tissue cooling device capable of properly preserving an object to be cooled while keeping quality of the same.

### SOLUTION TO PROBLEM

A tissue cooling device according to a first aspect of the present invention includes: a first cooler having a function of generating first cold air; and a second cooler to which gas is supplied from the first cooler. The second cooler adjusts the gas to form second cold air. The second cooler includes: a heat exchanger having a surface to be in contact with the gas supplied from the first cooler; and an adjustment substance supply unit configured to supply an adjustment substance for adjusting a temperature of the heat exchanger to the surface of the heat exchanger to be in contact with the gas supplied from the first cooler. The adjustment substance supplied from the adjustment substance supply unit has a freezing point higher than a temperature of the first cold air.

In the first aspect of the present invention, in the tissue cooling device according to a second aspect of the present invention, the adjustment substance may be alkaline water.

In the first or second aspect of the present invention, the tissue cooling device according to a third aspect of the present invention may include a blower configured to supply the gas from the first cooler to the second cooler. The heat exchanger may be a laminate structure formed by arranging a plurality of plate members parallel to and spaced apart from each other. The blower may be disposed to supply the gas from the first cooler to a space between the adjacent plate members of the heat exchanger.

In the third aspect of the present invention, in the tissue cooling device according to a fourth aspect of the present invention, the laminate structure of the heat exchanger may include: a first laminate structure including a plurality of plate members formed to have a decreasing width toward a side to which the gas is supplied from the first cooler; and a second laminate structure including a plurality of plate members formed to have an increasing width toward the side to which the gas is supplied from the first cooler. The first laminate structure and the second laminate structure may be alternately arranged in line along a direction intersecting with a supply direction of the gas from the first cooler to the heat exchanger.

In the first aspect of the present invention, the tissue cooling device according to a fifth aspect of the present invention may include: a storage unit including a space to which the second cold air is supplied; and an exhaust channel configured to supply gas inside the storage unit to the first cooler.

In the first aspect of the present invention, the tissue cooling device according to a sixth aspect of the present invention may include a storage unit including a space to which the second cold air is supplied. The storage unit may include an inner wall made of an aluminum material.

In the fifth or sixth aspect of the present invention, the tissue cooling device according to a seventh aspect of the present invention may include a storage chamber that can be communicated and interrupted with/from the storage unit. The storage chamber may include an inner shell chamber, an outer shell chamber, and a third cold air supply unit. The inner shell chamber may be coupled to the space inside the storage unit so as to be communicated and interrupted therewith/ therefrom, and include an interior space that is adjusted to a lower temperature than the space inside the storage unit. The outer shell chamber may surround the inner shell chamber with a space between the inner shell chamber and the outer shell chamber. The third cold air supply unit may be configured to supply third cold air to the space between the inner shell chamber and the outer shell chamber. The third cold air may have a temperature equal to or lower than a target temperature of the interior space of the inner shell chamber. The inner shell chamber may include an inner wall made of a material with high thermal conductivity.

In the seventh aspect of the present invention, in the tissue cooling device according to an eighth aspect of the present invention, the inner shell chamber may include a vent configured to interrupt communication between the interior space and the space between the inner shell chamber and the outer shell chamber.

### ADVANTAGEOUS EFFECTS OF INVENTION

According to the first aspect of the present invention, it is possible to adjust the first cold air generated by the first cooler or the gas supplied from the first cooler to form the second cold air having a target temperature by the second cooler. The second cold air is adjusted to the target temperature by contacting the first cold air or the gas supplied from the first cooler with the heat exchanger. Accordingly, by supplying this second cold air to a space where an object to be cooled is stored, it is possible to adjust the object to be cooled to a predetermined temperature.

According to the second aspect of the present invention, it is possible to appropriately adjust the second cold air.

According to the third aspect of the present invention, it is possible to increase a contact area between the first cold air or the gas supplied from the first cooler and the heat exchanger. This makes it easier to adjust the second cold air to the target temperature. Additionally, it becomes easier to hold the adjustment substance or the solidified adjustment substance in the heat exchanger.

According to the fourth aspect of the present invention, it is possible to appropriately adjust the second cold air.

According to the fifth aspect of the present invention, it becomes easier to maintain the inside of the storage unit at a predetermined temperature. By storing the object to be cooled in the storage unit, it is possible to adjust the object to be cooled to the predetermined temperature.

According to the sixth aspect of the present invention, it becomes easier to maintain the inside of the storage unit at the predetermined temperature. By storing the object to be cooled in the storage unit, it is possible to adjust the object to be cooled to the predetermined temperature.

According to the seventh aspect of the present invention, it is possible to store the object to be cooled, which becomes the predetermined temperature in the storage unit, at a target temperature lower than the temperature of the storage unit. This makes it possible to store the object to be cooled more stably. Moreover, it becomes easier to maintain the inside of the inner shell chamber at the target temperature or lower.

According to the eighth aspect of the present invention, it is possible to directly contact the third cold air with the object to be cooled in the inner shell chamber. This makes it possible to increase cooling speed of the object to be cooled.

### BRIEF DESCRIPTION OF DRAWINGS

FIG. 1 is a schematic diagram illustrating a tissue cooling device 1 of the present embodiment;
FIGs. 2A and 2B are schematic illustration of a heat conducting unit 6, where FIG. 2A is a schematic side view of the heat conducting unit 6 and FIG. 2B is a schematic illustration of a plate member 7a and a plate member 8a respectively constituting a first laminate structure 7 and a second laminate structure 8;
FIG. 3A is a schematic plan view of a heat conducting unit 6 and FIG. 3B is a schematic plan view of another heat conducting unit 6;
FIG. 4A illustrates one example of a flow channel 3h of a cooling unit 3, and FIG. 4B shows one example of simulation result of a gas flow in the flow channel 3h of the cooling unit 3;
FIG. 5 is a schematic view illustrating a tissue cooling device 1B of the present embodiment, including a storage chamber 20;
FIG. 6 is a schematic view illustrating a tissue cooling device 1C of the present embodiment, including a storage chamber 20;
FIG. 7 shows experimental result of Example 1;
FIG. 8 shows experimental result of Example 2;
FIGs. 9A to 9C show experimental result of Example 3, and FIGs. 9D and 9E show experimental result of Example 4;
FIG. 10 shows experimental result of Example 5;
FIG. 11 shows experimental result of Example 6;
FIG. 12 shows experimental result of Example 7; and
FIG. 13 shows experimental result of Example 8.

### DESCRIPTION OF EMBODIMENTS

A tissue cooling device of the present embodiment is a device used for controlling an object to be cooled at a predetermined temperature, characterized by its capability of storing and controlling the object to be cooled while keeping quality thereof.

The object to be cooled that is subjected to temperature management by the tissue cooling device of the present embodiment is not particularly limited. Examples of the object to be cooled include fresh foods such as fresh fish, raw meats, and vegetables, foods eaten uncooked or other foods, and substances having water-containing tissues, such as cellular tissues, for use in medical treatment.

Particularly, in a case of preserving food for a long time using the tissue cooling device of the present embodiment, it is possible to mitigate the cause of quality change as much as possible even during long-term storage. Furthermore, in a case of freezing food, it is possible to make freshness of the defrosted product close to the state before freezing process. For example, when food containing an emulsified structure is frozen in a usual manner, it cannot keep its pre-freezing state after defrosted; even in the case of such food, it is possible to make the condition and freshness of the defrosted product close to the state before freezing process.

In the following description, a representative case will be described, where the object to be cooled, which is subjected to temperature management by the tissue cooling device of the present embodiment, is food, and the food is cooled or frozen for storage.

### <Tissue Cooling Device 1 of Present Embodiment>

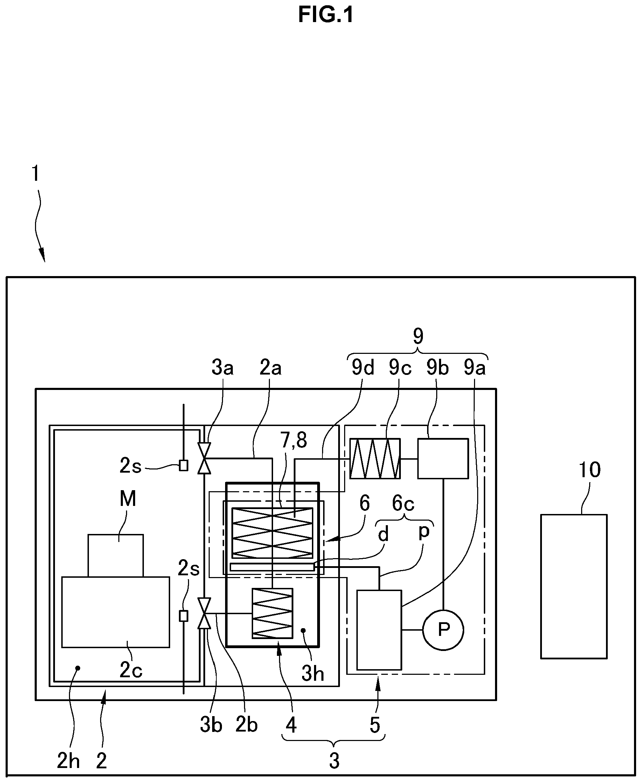

As illustrated in FIG. 1, a tissue cooling device 1 of the present embodiment includes: a storage unit 2 configured to store food as an object to be cooled M; a cooling unit 3 configured to cool the inside of the storage unit 2 to a predetermined temperature; and a control unit 10 configured to control operation of each unit.

### <Control Unit 10>

The tissue cooling device 1 of the present embodiment includes the control unit 10 having a function of controlling the operation of each unit based on the temperature inside the storage unit 2. Specifically, the control unit 10 has a function of controlling the operation of each unit such that the inside of the storage unit 2 falls within a predetermined temperature range based on information from a temperature sensor 2s configured to detect the temperature inside the storage unit 2. More specifically, the control unit 10 has a function of controlling operation of a first blower 3b and a second blower 3a, thereby adjusting a flow rate of gas circulating between the storage unit 2 and the cooling unit 3. Additionally, the control unit 10 has a function of controlling a temperature of second cold air, thereby adjusting the inside of the storage unit 2 to the predetermined temperature range. Specifically, the control unit 10 has a function of controlling generation of first cold air by a first cooler 4 of the cooling unit 3, stopping of the generation, and a temperature of the first cold air when the first cold air is generated, and controlling a temperature and a flow rate of an adjustment substance to be supplied to a second cooler 5 of the cooling unit 3 to control the temperature of the second cold air, thereby adjusting the inside of the storage unit 2 within the predetermined temperature range. Such control performed by the control unit 10 enables to maintain the inside of the storage unit 2 within the predetermined temperature range.

### <Storage Unit 2>

As illustrated in FIG. 1, the storage unit 2 has a space in which food to be subjected to temperature management is placed (hereinafter may be referred to as a storage space 2h). The storage unit 2 has a structure that allows food to be taken out from or put in the storage space 2h by opening/closing a door or the like (not shown). Further, the storage unit 2 is formed into a structure capable of isolating the storage space 2h from the outside in an airtight and insulated manner when the door or the like is closed. The storage unit 2 can have a structure including, for example, an outer wall and an inner wall made of metal such as aluminum and stainless steel, and a heat insulator made of a foam material or the like disposed between the outer wall and the inner wall. In such structure, a space surrounded by the inner wall serves as the above-described storage space 2h, so that temperature control of the second cold air to be supplied to the storage space 2h enables to maintain a temperature of gas inside this storage space 2h (hereinafter may be referred to as environmental temperature) at a predetermined temperature, for example, an average temperature of about -0.75°C.

In this storage space 2h of the storage unit 2, the temperature sensor 2s configured to measure the environmental temperature inside the storage space 2h (i.e. the temperature of the gas inside the storage space 2h) is disposed. This temperature sensor 2s is configured to transmit information regarding the detected environmental temperature inside the storage space 2h to the control unit 10. Then, the control unit 10 controls, based on the information (i.e. the environmental temperature) from the temperature sensor 2s, the operation of each unit of the tissue cooling device 1 of the present embodiment. Note that a position and the number of the temperature sensor 2s installed in the storage space 2h are not particularly limited, and the position and the number of the temperature sensor 2s to be disposed may be determined so as to properly grasp the environmental temperature inside the storage space 2h.

Note that the structure of the storage unit 2, which isolates the storage space 2h from the outside in the airtight and insulated manner, is not particularly limited. It is possible to employ a common structure (for example, structures employed for general refrigerators and freezers). Specifically, the storage unit 2 may have a structure capable of maintaining the inside of the storage space 2h at constant temperature for a certain period of time without supplying cold air, regardless of an outside air temperature, as long as the storage space 2h is kept in an airtight and sealed state from the outside.

### <Cooling Unit 3>

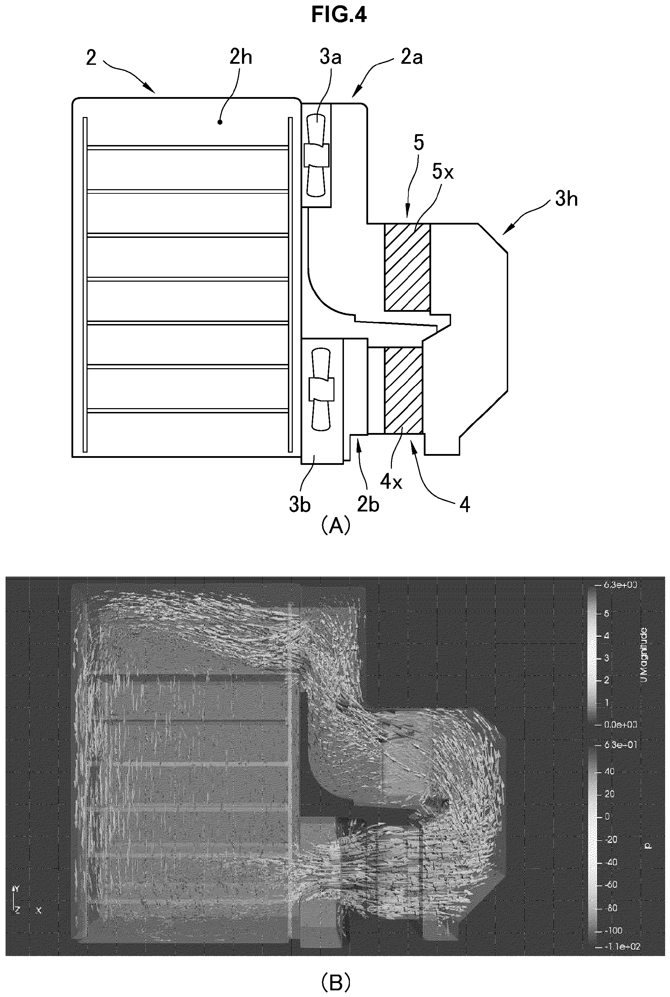

As illustrated in FIG. 1, the tissue cooling device 1 of the present embodiment includes the cooling unit 3 configured to supply the second cold air to the storage space 2h of the storage unit 2. This cooling unit 3 includes the first cooler 4 configured to generate the first cold air, the second cooler 5 configured to generate the second cold air, and a flow channel 3h in which a heat exchanger 4x of the first cooler 4 and a heat exchanger 5x of the second cooler 5 are installed (see FIG. 4A).

The flow channel 3h is a space communicated with the storage space 2h of the storage unit 2 via a supply channel 2a and an exhaust channel 2b, and has a structure capable of flowing gas from the exhaust channel 2b to the supply channel 2a (see FIG. 4). In this flow channel 3h, the heat exchanger 4x of the first cooler 4 and the heat exchanger 5x of the second cooler 5 are disposed in this order from the upstream side (i.e. disposed in line from the exhaust channel 2b to the supply channel 2a).

An inner wall of this flow channel 3h is made of a material with high heat storage performance such as an aluminum plate, and a heat insulator or the like is disposed outside the inner wall (for example, between the inner wall and an outer wall of the device). That is, the flow channel 3h has a structure capable of maintaining the temperature of the inside gas in a predetermined state while preventing outside (outside air, etc.) influence. Specifically, in a case of generating the first cold air having a predetermined temperature by the heat exchanger 4x of the first cooler 4, the flow channel 3h has a structure capable of flowing the first cold air generated by the first cooler 4 to the heat exchanger 5x of the second cooler 5 while maintaining the same at the predetermined temperature (see FIG. 4). Additionally, in a case of generating the second cold air having a predetermined temperature by the heat exchanger 5x of the second cooler 5, the flow channel 3h has a structure capable of flowing the second cold air generated by the second cooler 5 to the supply channel 2a while maintaining the same at the predetermined temperature.

### <First Blower 3b and Second Blower 3a>

As described above, the flow channel 3h is communicated with the storage space 2 of the storage unit 2 via the supply channel 2a and the exhaust channel 2b. In the supply channel 2a and the exhaust channel 2b, the second blower 3a and the first blower 3b are respectively disposed.

The first blower 3b is, for example, a known blower such as a common fan, and supplies the gas in the storage space 2 of the storage unit 2 to the heat exchanger 4x of the first cooler 4 (see FIG. 4) in the flow channel 3h through the exhaust channel 2b.

The second blower 3a is, for example, a known blower such as a common fan, and supplies the second cold air generated by the heat exchanger 5x of the second cooler 5 (see FIG. 4) through the supply channel 2a from the flow channel 3h into the storage space 2 of the storage unit 2.

By providing the first blower 3b and the second blower 3a, it is possible to circulate the gas between the storage space 2h of the storage unit 2 and the flow channel 3h of the cooling unit 3 by operating the first blower 3b and the second blower 3a. That is, the gas can be circulated in the following order: storage space 2h of storage unit 2 → exhaust channel 2b → flow channel 3h of cooling unit 3 → supply channel 2a → storage space 2h of storage unit 2 (see FIG. 4).

Note that the flow channel 3h may be formed into a structure capable of circulating the gas as described above, and the structure is not particularly limited. For example, as illustrated in FIG. 4, the structure may have a portion in which the flow of the gas is reversed in the midway, and the flow channel provided with the heat exchanger 4x of the first cooler 4 (the lower flow channel in FIG. 4) and the flow channel provided with the heat exchanger 5x of the second cooler 5 (the upper flow channel in FIG. 4) may be disposed in line along an up-and-down or left-and-right direction. Additionally, in the structure, both ends of the straight flow channel may be respectively connected to the exhaust channel 2b and the supply channel 2a, and the heat exchanger 4x of the first cooler 4 and the heat exchanger 5x of the second cooler 5 may be arranged side by side in the straight flow channel.

Additionally, when the heat exchanger 4x of the first cooler 4 generates the first cold air, the generated first cold air can be sent to the heat exchanger 5x of the second cooler 5 by operating the first blower 3b and the second blower 3a. On the other hand, even when the heat exchanger 4x of the first cooler 4 does not generate the first cold air, the gas discharged from the storage space 2 can be sent to the heat exchanger 5x of the second cooler 5 by operating the first blower 3b and the second blower 3a. Accordingly, the above-described first blower 3b and second blower 3a correspond to the blower as recited in the claims. Hereinafter, the first blower 3b and the second blower 3a together may be referred to as the blower.

On the other hand, only one of the first blower 3b and the second blower 3a may be provided. That is, as long as the gas can be circulated as described above (in other words, as long as the gas can be sent from the first cooler 4 to the second cooler 5), any one of the first blower 3b and the second blower 3a, not both of them, may be provided. However, when both of the first blower 3b and the second blower 3a are provided, the above-described circulation of the gas can be stabilized, and the gas flow can easily be adjusted. Moreover, each unit can be miniaturized, which also contributes to miniaturization of the device itself. Furthermore, in order to adjust the flow of the gas inside the flow channel 3h more stably and accurately, a blower to flow the gas from the first cooler 4 to the second cooler 5, etc. may be disposed between the first cooler 4 and the second cooler 5, in addition to the first blower 3b and the second blower 3a.

### <First Cooler 4>

The first cooler 4 has a function of cooling the gas supplied from the storage space 2 of the storage unit 2 to generate the first cold air. The first cooler 4 may have a function capable of cooling the gas supplied from the storage space 2 of the storage unit 2 to a predetermined temperature, and a mechanism and a method for cooling the gas are not particularly limited. For the first cooler 4, for example, a commonly used vapor-compression refrigeration cycle can be employed. That is, a freezing machine including an evaporator, a compressor, an expansion valve, and a condenser can be employed as the first cooler 4.

When such freezing machine is employed as the first cooler 4, the first cold air can be generated as follows.

Firstly, a liquid at ordinary temperature and high pressure undergoes pressure reduction in the expansion valve to be formed into a gas-liquid mixed refrigerant at low temperature and low pressure (i.e. a refrigerant in a mixed state of gas and liquid). The gas-liquid mixed refrigerant adjusted to low temperature and low pressure is supplied to the evaporator, where the gas-liquid mixed refrigerant at low temperature and low pressure absorbs heat and evaporates. When a surface temperature of this evaporator (corresponding to the above-described heat exchanger 4x of the first cooler 4) is lower than that of the gas supplied from the storage space 2 of the storage unit 2, this gas can be brought into contact with the surface of the evaporator, thereby cooling the gas to generate the first cold air at a target temperature.

The operation of the first cooler 4 is controlled by the control unit 10. Specifically, the control unit 10 controls the operation of the first cooler 4 to generate the first cold air at the target temperature based on the above-described information from the temperature sensor 2s and the flow rate of the gas inside the flow channel 3h (in the case of the vapor-compression refrigeration cycle, controls the operation of the compressor). The control unit 10 controls the first cooler 4 as follows.

Firstly, when the environmental temperature inside the storage space 2h of the storage unit 2 is provided from the temperature sensor to the control unit 10, the control unit 10 determines whether the environmental temperature is equal to or higher than a set temperature. Then, when the environmental temperature is equal to or higher than the set temperature, the control unit 10 operates the first cooler 4 to generate the first cold air, thereby enabling the first cooler 4 to generate the first cold air. On the other hand, when the environmental temperature is lower than the set temperature, the control unit 10 stops the operation of the first cooler 4, thereby stopping the generation of the first cold air by the first cooler 4.

Note that even when the first cooler 4 does not generate the first cold air, the gas supplied from the storage space 2h of the storage unit 2 to the first cooler 4 is supplied to the second cooler 5 by the blower. That is, when the first cooler 4 does not generate the first cold air, the gas at the environmental temperature inside the storage space 2h of the storage unit 2 or the gas at a temperature close to the environmental temperature inside the storage space 2h of the storage unit 2 (hereinafter both together may be simply referred to as the gas at the environmental temperature) is supplied to the second cooler 5 by the blower.

### <Second Cooler 5>

The second cooler 5 has a function of adjusting the temperature of the gas supplied from the first cooler 4 (for example, the first cold air or the gas at the environmental temperature) to generate the second cold air. More specifically, the second cooler 5 has a function of adjusting the temperature of the gas supplied from the first cooler 4 to generate, from this gas, the second cold air adjusted to a target temperature.

This second cooler 5 includes a heat exchanger 6 having a surface to be in contact with the gas supplied from the first cooler 4, and an adjustment substance supply unit 9 configured to supply the adjustment substance to the heat exchanger 6.

### <Adjustment substance Supply Unit 9>

The adjustment substance supply unit 9 has a function of adjusting the adjustment substance to a predetermined state and supplying the adjusted adjustment substance to the heat exchanger 6. The adjustment substance refers to alkaline water or brine, which is a liquid (adjustment liquid) adjusted to have a freezing point lower than the freezing point of water. More specifically, the adjustment liquid refers to a liquid adjusted to have a freezing point equal to or higher than the target temperature of the first cold air (for example, -0.3 to -1°C). When the adjustment liquid is brine, it can be used as the adjustment liquid having the freezing point within the above range by adjusting its salt concentration to 0.05% by mass or more and 1% by mass or less.

The adjustment substance supply unit 9 may have a function capable of supplying the adjustment liquid adjusted to the predetermined state to the heat exchanger 6, and the structure thereof is not particularly limited. For example, as illustrated in FIG. 1, as the adjustment substance supply unit 9, a configuration including an undiluted solution supply unit 9a, a mixing unit 9b, a cooling unit 9c, and a liquid distribution unit 9d can be employed.

The undiluted solution supply unit 9a is configured to store an undiluted solution of the adjustment liquid. When the adjustment liquid is brine, brine at a higher concentration than the adjustment liquid can be employed as the undiluted solution. Furthermore, when the adjustment liquid is alkaline water, naturally derived alkaline water can be employed as the undiluted solution.

The mixing unit 9b is configured to mix the undiluted solution supplied from the undiluted solution supply unit 9a with a mixing liquid such as water and an adjuster to adjust the adjustment liquid to the predetermined state. The mixing liquid and the adjuster refer to a liquid or a reagent that can be mixed with the undiluted solution to adjust a concentration of a predetermined component (for example, salt), pH etc., of the undiluted solution. For example, when the adjustment liquid is brine, water can be employed as the mixing liquid. Furthermore, when the adjustment liquid is alkaline water, water can be employed as the mixing liquid. Note that for the adjustment of the adjustment liquid, only one or a plurality of mixing liquids and adjusters may be used.

The cooling unit 9c is capable of cooling the adjustment liquid adjusted by the mixing unit 9b to a predetermined temperature (for example, -0.5 to -1°C). A structure and a mechanism of the cooling unit 9c are not particularly limited as long as the adjustment liquid can be cooled to the predetermined temperature, and a known cooler can be employed.

The liquid distribution unit 9d is configured to supply the adjustment liquid, which is supplied from the cooling unit 9c, to a plurality of first laminate structures 7 and a plurality of second laminate structures 8 of the heat exchanger 6. Specifically, the liquid distribution unit 9d supplies a predetermined amount of the adjustment liquid at a predetermined timing to surfaces of a plurality of the first laminate structures 7 and a plurality of the second laminate structures 8 (specifically, surfaces of a plurality of the first laminate structures 7 and a plurality of the second laminate structures 8, which come in contact with the gas supplied from the first cooler 4). This liquid distribution unit 9d includes a sensor to measure a supply amount (for example, a flowmeter, etc.), and a communication interrupter such as a valve to supply and stop the adjustment liquid. This communication interrupter is, for example, a known device such as an automatic valve that operates based on a command from the control unit 10. The communication interrupter is configured to operate based on an instruction from the control unit 10. By providing such sensor and communication interrupter, the control unit 10 can control the supply of the adjustment liquid to a plurality of the first laminate structures 7 and a plurality of the second laminate structures 8, and the stopping of the supply, depending on states of a plurality of the first laminate structures 7 and a plurality of the second laminate structures 8. Note that the communication interrupter may automatically operate based on the instruction from the control unit 10 as described above, or may be operated by an operator based on the instruction from the control unit 10.

Note that the liquid distribution unit 9d may be configured to be able to supply the adjustment liquid to the surfaces of a plurality of the first laminate structures 7 and the surfaces of a plurality of the second laminate structures 8, and the configuration thereof is not particularly limited. For example, the adjustment liquid may be dropped from above a plurality of the first laminate structures 7 and a plurality of the second laminate structures 8, and flow from top to bottom across the surfaces of a plurality of the first laminate structures 7 and the surfaces of a plurality of the second laminate structures 8. Additionally, the adjustment liquid may be sprayed by a nozzle or the like to the surfaces of a plurality of the first laminate structures 7 and the surfaces of a plurality of the second laminate structures 8.

Additionally, in the adjustment substance supply unit 9, it is desirable to dispose a sensor to measure the conditions of the adjustment liquid (for example, concentrations of various components, pH, temperature, etc.) in the flow channel through which the adjustment liquid is supplied from the cooling unit 9c to the heat exchanger 6. By providing such sensor to provide the control unit 10 with information from the sensor, it is possible to adjust, based on the information, the amounts etc. of the undiluted solution, the adjustment liquid, the mixing liquid, and the adjuster to be supplied to the mixing unit 9b. This enables to adjust the conditions of the adjustment liquid to an appropriate state, and also adjust the temperature of the adjustment liquid to an appropriate temperature. Note that the adjustment of the amounts, etc. of the undiluted solution, the adjustment liquid, the mixing liquid, and the adjuster to be supplied to the mixing unit 9b may be automatically performed by a known device such as an automatic valve that operates based on a command from the control unit 10, or may be performed by an operator based on an instruction from the control unit 10.

Furthermore, the adjustment substance may be composed only of the adjustment liquid as described above, or may contain a solid, that is, a solidified mass formed from the adjustment liquid. That is, the "adjustment substance" as recited in the claims includes both of a substance composed only of a liquid (i.e. the adjustment liquid) and a substance with a solidified mass of the adjustment liquid contained in the adjustment liquid (i.e. the adjustment liquid in a solid-liquid two-phase state).

Furthermore, the adjustment substance supply unit 9 may be configured to supply only the solidified mass formed from the adjustment liquid to a plurality of the first laminate structures 7 and a plurality of the second laminate structures 8. In this case, the solidified mass cannot be flowed or sprayed, like the adjustment liquid, to the surfaces of a plurality of the first laminate structures 7 and the surfaces of a plurality of the second laminate structures 8. However, it is possible to supply the solidified adjustment substance to a plurality of the first laminate structures 7 and a plurality of the second laminate structures 8, in such a manner as to bring the solidified adjustment substance into contact with the surfaces of a plurality of the first laminate structures 7 and the surfaces of a plurality of the second laminate structures 8, or in such a manner that the solidified adjustment substance is in contact with the surfaces of a plurality of the first laminate structures 7 and the surfaces of a plurality of the second laminate structures 8 after the solidified adjustment substance is supplied. Supplying in such a manner to contact the solidified adjustment substance with the surfaces of a plurality of the first laminate structures 7 and the surfaces of a plurality of the second laminate structures 8 is also included in "supply an adjustment substance for adjusting a temperature of the heat exchanger to the surface of the heat exchanger to be in contact with the gas supplied from the first cooler" as recited in the claims. Furthermore, the solidified mass formed from the adjustment substance is also included in the "adjustment substance" as recited in claims.

### <Heat Exchanger 6>

The heat exchanger 6 is where the adjustment substance is supplied from the adjustment substance supply unit 9. Additionally, the heat exchanger 6 is where the gas sent from the first cooler 4 is supplied. This heat exchanger 6 includes a plurality of the first laminate structures 7 and a plurality of the second laminate structures 8. Note that a plurality of the first laminate structures 7 and a plurality of the second laminate structures 8 of the heat exchanger 6 correspond to the above-described heat exchanger 5x of the second cooler 5.

### <First Laminate Structure 7>

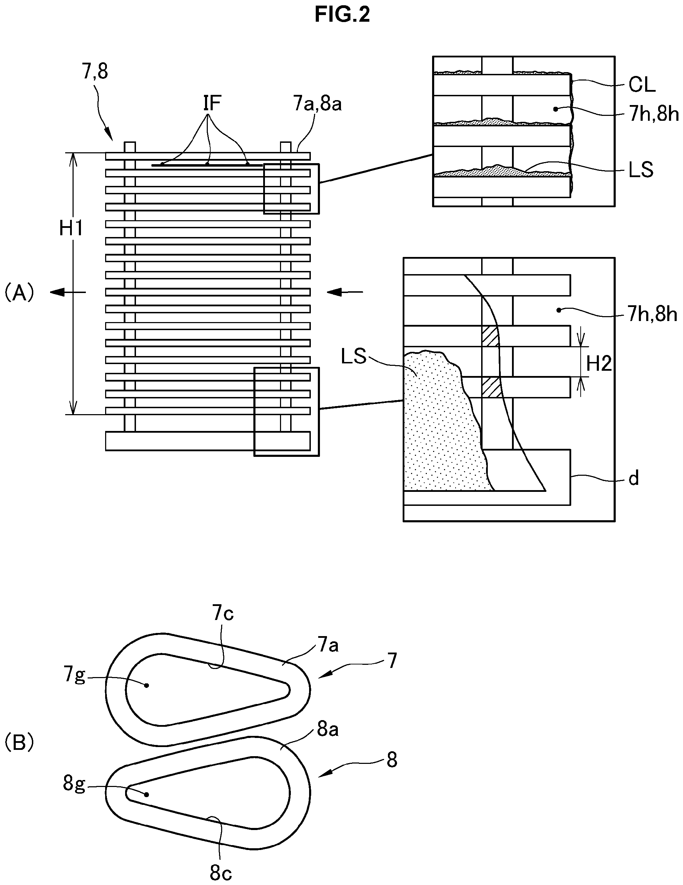

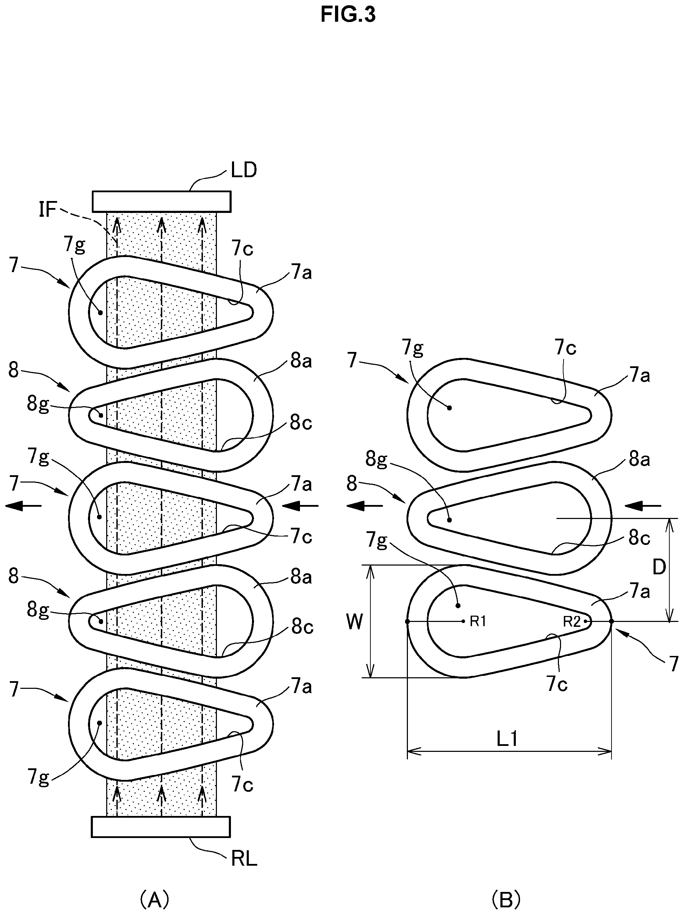

As illustrated in FIG. 2A, the first laminate structure 7 is a structure formed by stacking a plurality of plate members 7a along an up-and-down direction. A plurality of the plate members 7a are members having the same shape and the same thickness, and made of a material with high thermal conductivity, such as aluminum, stainless steel, or other metals. Specifically, a plurality of the plate members 7a are formed to have a narrowing width from one end to the other, and are placed in the first laminate structure 7 such that its end having the narrowed width is positioned on the side where the gas is supplied from the first cooling unit 4 (the right side in FIGs. 2 and 3) (see FIGs. 2B and 3). That is, in the first laminate structure 7, all of a plurality of the plate members 7a are arranged such that its width decreases toward the side where the gas is supplied from the first cooling unit 4. Moreover, a plurality of the plate members 7a have a gap formed between the plate members 7a adjacent to each other in the up-and-down direction via a spacer or the like, and the gas supplied from the first cooling unit 4 can be flowed through this gap. That is, in the first laminate structure 7, a plurality of the plate members 7a are disposed such that surfaces of a plurality of the plate members 7a (upper and lower surfaces in FIG. 2A) are in contact with the gas supplied from the first cooler 4. Note that hereinafter, this gap may be referred to as a gas flow channel 7h.

### <Second Laminate Structure 8>

As illustrated in FIG. 2A, the second laminate structure 8 is a structure formed by stacking a plurality of plate members 8a along an up-and-down direction, and has approximately the same structure as the first laminate structure 7. Specifically, a plurality of the plate members 8a that form the second laminate structure 8 are members having approximately the same shape and the same thickness as a plurality of the plate members 7a, and are made of a material with high thermal conductivity, such as aluminum, stainless steel, or other metals. A plurality of the plate members 8a are also formed to have a narrowing width from one end to the other, similar to a plurality of the plate members 7a of the first laminate structure 7. Moreover, a plurality of the plate members 8a have gaps formed between the plate members 8a adjacent to each other in an up-and-down direction via a spacer or the like, and the gas supplied from the first cooling unit 4 can be flowed through this gap. That is, in the second laminate structure 8, a plurality of the plate members 8a are disposed such that surfaces of a plurality of the plate members 8a (upper and lower surfaces in FIG. 2A) are in contact with the gas supplied from the first cooler 4. Note that hereinafter, this gap may be referred to as a gas flow channel 8h. On the other hand, the second laminate structure 8 is different from the first laminate structure 7 in that the narrowed end of a plurality of the plate members 8a is all arranged on an opposite side of where the gas is supplied from the first cooling unit 4 (the right side in FIG. 2) (see FIGs. 2B and 3).

Further, as illustrated in FIG. 3, a plurality of the first laminate structures 7 and a plurality of the second laminate structures 8 are alternately arranged in line along a direction (the up-and-down direction in FIGs. 3A and 3B) intersecting with the supply direction of the gas from the first cooling unit 4 (the direction of the arrow in FIGs. 2A, 3A and 3B). More specifically, a plurality of the first laminate structures 7 and a plurality of the second laminate structures 8 are arranged such that each second laminate structure 8 is positioned in a wedge-shaped space formed between the adjacent first laminate structures 7.

### <Saucer d>

As illustrated in FIGs. 1 and 2A, a saucer d is disposed below a plurality of the first laminate structures 7 and a plurality of the second laminate structures 8. This saucer d is a member to hold the adjustment substance such as the adjustment liquid supplied to a plurality of the first laminate structures 7 and a plurality of the second laminate structures 8.

Note that the control unit 10 controls to supply and stop the adjustment substance by the liquid distribution unit 9d depending on the states of a plurality of the first laminate structures 7 and a plurality of the second laminate structures 8. If the saucer d has a certain volume, the adjustment substance does not overflow from the saucer d. However, in a case of continuously supplying the adjustment liquid to a plurality of the first laminate structures 7 and a plurality of the second laminate structures 8, or in a case that the adjustment substance may be supplied beyond the capacity of the saucer d due to a trouble or the like, a return unit 6c including the saucer d may be disposed in the heat exchanger 6. For example, the return unit 6c including the saucer d and a return pipe p that communicates between the saucer d and the undiluted solution supply unit 9a and/or the mixing unit 9b may be provided. By providing such return unit 6c and disposing, in the return pipe p, a pump or the like for delivering the adjustment substance (adjustment liquid) from the saucer d to the undiluted solution supply unit 9a and/or the mixing unit 9b, it is possible to prevent the adjustment substance from overflowing from the saucer d.

### <Adjustment of Second Cold Air by Cooling Unit 3>

Since the cooling unit 3 has the structure as described above, the second cold air at the target temperature can be adjusted by supplying the gas from the first cooling unit 4 to a plurality of the first laminate structures 7 and a plurality of the second laminate structures 8 of the heat exchanger 6 while supplying the adjustment substance from the adjustment substance supply unit 9 to a plurality of the first laminate structures 7 and a plurality of the second laminate structures 8 of the heat exchanger 6.

Hereinafter, how to adjust the second cold air at the target temperature in the cooling unit 3 will be described.

Firstly, to a plurality of the first laminate structures 7 and a plurality of the second laminate structures 8, the adjustment substance is supplied from the liquid distribution unit 9d of the adjustment substance supply unit 9. Then, the adjustment substance flows from top to bottom along the surfaces of a plurality of the plate members 7a of a plurality of the first laminate structures 7 and a plurality of the plate members 8a of a plurality of the second laminate structures 8 (hereinafter may be simply referred to as a plurality of the plate members 7a, 8a) (see CL in FIG. 2A). Once the adjustment substance comes in contact with the surfaces of a plurality of the plate members 7a, 8a, a plurality of the plate members 7a, 8a becomes approximately the same temperature as the adjustment substance while the first cold air is not being supplied. This is because a plurality of the plate members 7a, 8a are made of a material with high thermal conductivity. Note that when the adjustment substance is the solidified mass or solid-liquid two-phase adjustment liquid, a plurality of the plate members 7a, 8a in contact with the solidified mass has approximately the same temperature as the solidified mass.

In this state, when the first cold air is supplied from the first cooling unit 4 to a plurality of the first laminate structures 7 and a plurality of the second laminate structures 8 of the heat exchanger 6, the surfaces of a plurality of the plate members 7a, 8a come in contact with the first cold air. Then, when the target temperature of the first cold air is about -3°C to -10°C, for example, a plurality of the plate members 7a, 8a are cooled by the first cold air in a short period. This is because a plurality of the plate members 7a, 8a are made of a material with high thermal conductivity. Additionally, the first cold air draws heat from a plurality of the plate members 7a, 8a as a result of the contact with a plurality of the plate members 7a, 8a, leading to the increased temperature of the first cold air and generation of cold air having a higher temperature than the target temperature of the first cold air in contact with a plurality of the plate members 7a, 8a.

Meanwhile, the adjustment substance is present on the surfaces of a plurality of the plate members 7a, 8a (i.e. the surfaces in contact with the first cold air supplied from the first cooling unit 4) (or there exists the adjustment substance in contact with the surfaces). When a plurality of the plate members 7a, 8a come in contact with the first cold air and are cooled, the adjustment substance is also cooled in a short period. This is because a plurality of the plate members 7a, 8a are made of a material with high thermal conductivity. Then, a plurality of the plate members 7a, 8a draw heat from the adjustment substance, resulting in the decreased temperature of the adjustment substance or a part of the liquid adjustment substance (i.e. the adjustment liquid) solidified into a solidified mass (see LS in FIG. 2A). That is, when the first cold air comes in contact with the surfaces of a plurality of the plate members 7a, 8a, the first cold air draws heat not only from a plurality of the plate members 7a, 8a but also from the adjustment substance through a plurality of the plate members 7a, 8a. Accordingly, the second cold air generated from the first cold air is adjusted to the target temperature according to the volume and temperature of a plurality of the plate members 7a, 8a, and the amount of the adjustment substance present on the surfaces of a plurality of the plate members 7a, 8a. In this event, the temperature of a plurality of the plate members 7a, 8a is approximately the same as the target temperature of the second cold air.

On the other hand, due to the continued supply of the second cold air, the environmental temperature inside the storage space 2h of the storage unit 2 becomes lower than a predetermined temperature. When the temperature sensor 2s detects this temperature change, the control unit 10 stops the operation of the first cooler 4 based on that information, and the generation of the first cold air by the first cooler 4 is stopped. This causes the first cooler 4 to supply the gas at the environmental temperature to a plurality of the first laminate structures 7 and a plurality of the second laminate structures 8 of the heat exchanger 6 of the second cooler 5. Because the environmental temperature is higher than the target temperature of the first cold air and the target temperature of the second cold air, when the gas at the environmental temperature comes in contact with the surfaces of a plurality of the plate members 7a, 8a, in turn, heat is applied from the gas at the environmental temperature to a plurality of the plate members 7a, 8a. In other words, a plurality of the plate members 7a, 8a will draw heat from the gas at the environmental temperature (of course, even the adjustment substance in contact with the gas at the environmental temperature will draw heat from the gas at the environmental temperature). Here, in the case that a plurality of the plate members 7a, 8a draw heat from the gas at the environmental temperature, the heat is supplied to the adjustment substance in a short period and used for increasing the temperature of the adjustment substance or melting the solidified adjustment substance. This is because a plurality of the plate members 7a, 8a are made of a material with high thermal conductivity. Then, a plurality of the plate members 7a, 8a draw heat from the gas at the environmental temperature with almost no change in its temperature, and thus a plurality of the plate members 7a, 8a are maintained in approximately the same state (i.e. approximately the same temperature) as when they are in contact with the first cold air. This makes it possible to generate, from the gas at the environmental temperature in contact with a plurality of the plate members 7a, 8a, the second cold air prepared at the target temperature (i.e. approximately the same temperature as the temperature of a plurality of the plate members 7a, 8a).

Furthermore, when the adjustment of the second cold air from the gas at the environmental temperature continues, the temperature of the adjustment substance present on the surfaces of a plurality of the plate members 7a, 8a increases, and the amount of the solidified mass decreases. Then, the temperature of a plurality of the plate members 7a, 8a increases, leading to the decreased amount of heat that a plurality of the plate members 7a, 8a can draw from the gas at the environmental temperature. As a result, the temperature of the second cold air to be prepared becomes higher than the temperature (i.e. the target temperature) of the second cold air prepared from the first cold air, and the temperature inside the storage space 2h of the storage unit 2 increases. Additionally, also in a case that the object to be cooled stored in the storage space 2h of the storage unit 2 is changed (for example, the number of the object to be cooled is increased, etc.) while the second cold air is being adjusted from the gas at the environmental temperature, the temperature inside the storage space 2h of the storage unit 2 increases. When the temperature sensor 2s detects such increase in the temperature, the control unit 10 resumes the operation of the first cooler 4 based on that information, such that the generation of the first cold air by the first cooler 4 is resumed. This results in the decreased temperature of the second cold air to be prepared (i.e. the second cold air at the target temperature is prepared), and thus the temperature inside the storage space 2h of the storage unit 2 can also be decreased.

As described above, by supplying the gas inside the storage space 2h of the storage unit 2 to the cooling unit 3, it is possible to prepare the second cold air at the target temperature and return the same into the storage space 2h of the storage unit 2, such that the environmental temperature inside the storage space 2h of the storage unit 2 can be kept within the predetermined temperature range.

Note that the adjustment substance also comes in contact with the first cold air, but the adjustment substance is mostly cooled as a result of the contact with the surfaces of a plurality of the plate members 7a, 8a. Therefore, it can be considered that the adjustment substance is not directly involved in the phenomenon of generating the second cold air from the first cold air. That is, even if the first cold air comes in contact with the adjustment substance, the temperature of the first cold air slightly decreases, and it can be considered that the mere contact between the first cold air and the adjustment substance does not cause generation of the second cold air.

Note that as described above, when the inner wall of the flow channel 3h, that is, the entire inner surface, which is in contact with the gas flowing through the flow channel 3h, is made of a material with high thermal conductivity (aluminum, etc.) and the inner wall has a certain volume (i.e. heat capacity), it is possible to enhance the function of preparing the second cold air at the target temperature. In this case, when the gas at the environmental temperature comes in contact with the inner wall of the flow channel 3h while the operation of the first cooler 4 is being stopped, the inner wall of the flow channel 3h can draw heat from this gas, thereby decreasing the temperature of the gas. That is, it is also possible to cause the inner wall of the flow channel 3h to exert a function of adjusting the temperature of the gas to be supplied to a plurality of the first laminate structures 7 and a plurality of the second laminate structures 8 of the heat exchanger 6 of the second cooler 5. Note that even when the inner wall of the flow channel 3h is made of a material with not-so-high thermal conductivity, the temperature of the gas at the environmental temperature can be lowered by installing, on the inner surface, a panel or the like made of a material with high thermal conductivity (aluminum, etc.) and having a certain heat capacity.

Furthermore, if the supply of the first cold air from the first cooler 4 continues for a certain period of time, there is a possibility that the solidified mass of the adjustment substance formed on a plurality of the plate members 7a, 8a increases even if the inside of the storage space 2h of the storage chamber 2 is at the proper environmental temperature (i.e. the temperature at which the first cooler 4 is operated). When the excessive amount of the solidified mass is formed, the gas flow channels 7h, 8h become narrow, resulting in increased flow resistance of the first cold air passing through a plurality of the first laminate structures 7 and a plurality of the second laminate structures 8. Additionally, if the surfaces of a plurality of the plate members 7a, 8a are covered with the solidified mass, there is a possibility that the contact area between the first cold air and a plurality of the plate members 7a, 8a becomes small, which reduces the function of drawing heat from the first cold air obtained by a plurality of the plate members 7a, 8a, making it impossible to generate the second cold air at the target temperature.

Accordingly, to prevent such problems, the control unit 10 of the cooling unit 3 preferably has a function of decreasing the amount of the solidified mass when the amount of the solidified mass of the adjustment substance on the surfaces of a plurality of the plate members 7a, 8a is more than a predetermined amount. For example, a heater or the like may be disposed on a plurality of the plate members 7a, 8a, and the control unit 10 may be provided with a function of operating this heater 10 to melt the solidified mass of the adjustment substance. Additionally, when the adjustment liquid is continuously supplied to some extent to a plurality of the plate members 7a, 8a, the control unit 10 may stop the supply of the adjustment substance to a plurality of the first laminate structures 7 and a plurality of the second laminate structures 8 or change the state of the adjustment substance, thereby decreasing the amount of the solidified mass. In this case, when the amount of the solidified mass of the adjustment substance present on the surfaces of a plurality of the plate members 7a, 8a becomes less than the predetermined amount, the control unit 10 controls to return to a normal state.

Furthermore, repeated supply and stop of the first cold air from the first cooler 4 causes a phenomenon that the amount of the adjustment substance present on a plurality of the first laminate structures 7 and a plurality of the second laminate structures 8 decreases. The decrease in the amount of the adjustment substance reduces the ability of the adjustment substance to adjust the temperature of a plurality of the plate members 7a, 8a. Thus, when the amount of the adjustment substance decreases, the control unit 10 controls the operation of the liquid distribution unit 9d to supply the adjustment substance to a plurality of the first laminate structures 7 and a plurality of the second laminate structures 8. This enables a state where there always exists the appropriate amount of the adjustment substance for temperature control of a plurality of the plate members 7a, 8a on a plurality of the first laminate structures 7 and a plurality of the second laminate structures 8, and thus the second cold air at the target temperature can stably be generated.

When performing the control as described above, it is necessary to grasp the amount of the solidified mass of the adjustment substance present on the surfaces of the several plate members 7a, 8a. A method for grasping the amount of the solidified mass is not particularly limited. For example, the amount of the solidified mass may be grasped by an infrared sensor. For example, as illustrated in FIG. 3, an infrared irradiation unit RL configured to irradiate infrared IF and an infrared sensor LD are disposed to sandwich a plurality of the first laminate structures 7 and a plurality of the second laminate structures 8 from the side (sandwich from above and below in FIG. 3). Further, the infrared irradiation unit RL and the infrared sensor LD are arranged such that the infrared IF irradiated by the infrared irradiation unit RL passes through the gap between the adjacent plate members 7a, 8a of a plurality of the first laminate structures 7 and a plurality of the second laminate structures 8, i.e. the gas flow channels 7h, 8h (see FIG. 2A), and the infrared IF after passing through the gas flow channels 7h, 8h is received by the infrared sensor LD. This makes it possible to grasp the amount of the adjustment substance (particularly, the solidified mass of the adjustment substance) present on a plurality of the first laminate structures 7 and a plurality of the second laminate structures 8 based on the amount of the infrared IF detected by the infrared sensor LD. That is, when the amount of the infrared IF detected by the infrared sensor LD is a predetermined amount, it can be determined that the appropriate amount of the adjustment substance for the temperature control of a plurality of the plate members 7a, 8a is present. Additionally, when the amount of the infrared IF detected by the infrared sensor LD is less than the predetermined amount, the amount of the adjustment substance can be determined as excessive, and thus the control unit 10 can operate the heater or the like to melt the solidified mass of the adjustment substance. Conversely, when the amount of the infrared IF detected by the infrared sensor LD is more than the predetermined amount, the amount of the adjustment substance can be determined as too little, and thus the control unit 10 can operate the liquid distribution unit 9d to supply the adjustment substance to a plurality of the first laminate structures 7 and a plurality of the second laminate structures 8.

When the tissue cooling device 1 of the present embodiment includes the storage unit 2 and the cooling unit 3 as described above, the second cold air at the target temperature can be constantly supplied to the storage space 2h of the storage unit 2, and thus the object to be cooled M stored in the storage space 2h can be maintained at a predetermined temperature. For example, when the target temperature of the second cold air is -0.75°C on average, the environmental temperature inside the storage space 2h can be kept at the average temperature of about -0.75°C, and thus the object to be cooled M can be kept at the predetermined temperature. For example, with the tissue cooling device 1 of the present embodiment, it is also possible to accurately control temperature so as to maintain even food difficult to store, such as leaf vegetables and soft vegetables, at temperature within a limit temperature range (-0.1 to -1°C) where freezing is unlikely to occur inside the food.

Furthermore, in the case that the object to be cooled M is food, supplying the second cold air at the target temperature of -0.75°C on average can maintain the temperature of the object to be cooled M in the storage space 2h of the storage unit 2 at approximately -0.75°C or so, and can cool the object to be cooled M almost uniformly from the surface thereof to the center (temperature difference between positions is within ±0.2°C). That is, the object to be cooled M can be adjusted to a temperature state equal to or lower than a freezing point as well as to a state of uniform internal temperature. Therefore, cooling fresh foods by the tissue cooling device 1 of the present embodiment enables to keep quality of the fresh foods at a high level. For example, since the temperature state equal to or lower than the freezing point corresponds to the temperature at which fungi become dormant, deterioration of the quality of food caused by fungi can be prevented. That is, by storing foods in the storage unit 2, it is possible to mitigate action of microorganisms (i.e. rot and fermentation), decomposition action of enzymes in foods, chemical actions such as oxidation, physical actions such as drying, and biological activities of food itself such as absorption and transpiration, thereby extending the quality preservation period of foods.

Moreover, in the tissue cooling device 1 of the present embodiment, when the object to be cooled M is food, the environmental temperature inside the storage space 2h can be maintained at the average temperature of about -0.75°C by setting the target temperature of the second cold air to -0.75°C on average. This enables to even out the temperature of heat retained by the object to be cooled M itself; specifically, the temperature can be adjusted to 0°C or lower. In foods, amino acids, minerals, etc. are dissolved in moisture content in the foods, and thus freezing occurs in the foods themselves, for example, within a range of -5°C or higher and -1°C or lower. However, in the tissue cooling device 1 of the present embodiment, even when the temperature of the object to be cooled M becomes equal to or lower than -0.5°C, it is possible to adjust whole individual foods to a uniform temperature state equal to or lower than a freezing point while preventing freezing from occurring in the foods. Accordingly, it is possible to keep quality of fresh foods at a high level, for example.

Cooling the object to be cooled M by using the tissue cooling device 1 of the present embodiment having such function enables long-term preservation even when the object to be cooled M is vegetable or fruit.

For example, a problem with soft food such as strawberry is that it quickly loses freshness, so it must be packed (wrapped, packaged) and shipped on the day of its harvesting. Thus, only a short time for size and quality sorting is allowed, making it difficult to unify quality values. In contrast, when soft food such as strawberry is stored in the storage space 2h of the storage chamber 2 of the tissue cooling device 1 of the present embodiment, the quality maintenance period can be extended, making it possible to further extend the time spent on sorting. Then, reliable sorting of soft food such as strawberry also improves reliability of the quality and maintains the shelf life after shipping. Therefore, there are many benefits from deregulation, including logistics.

Furthermore, in a case of fruits and vegetables, a harvester independently determines the timing of harvesting and subsequent processing. The taste and optimal nutritional period of individual vegetable or fruit are different from each other. The period called the best season is roughly classified into four seasons in about one year, depending on regional characteristics. If quality in the best season can be maintained for 30 days to 90 days, it is possible to supply fresh and tasty vegetables and fruits in a necessary and appropriate amount. This is extremely beneficial as a measure against a problem of the low self-sufficiency rate of 4% in Japan, from the viewpoint of reducing the waste rate. When such fruits and vegetables are stored in the storage space 2h of the storage chamber 2 of the tissue cooling device 1 of the present embodiment, the quality in the best season can be maintained for 30 to 90 days, and fresh and tasty vegetables and fruits can be supplied in the necessary and appropriate amount.

### <Design Principle of Tissue Cooling Device 1 of Present Embodiment>

Here, a design principle of the above-described tissue cooling device 1 of the present embodiment, that is, an idea of the temperature control realized in the tissue cooling device 1 of the present embodiment will be described.

First of all, regarding a problem of quality change in every food, behavior of moisture is one of important factors. Regarding the behavior of moisture in foods, mitigation of change in specific gravity of water due to temperature also makes it possible to simplify a handling method of food.

First and for most, safety is important for handling foods. Furthermore, in the case of storing foods, inherent nutrition and actions on five senses, such as color, taste, and texture, of the foods should be preserved. Since a low temperature zone effective for preserving foods at constant temperature overlaps with a temperature zone that restricts the behavior of moisture in foods, it is considered possible to achieve long-term preservation and ultra-long-term frozen preservation while keeping high quality.

Conventionally, it has been believed that growth of ice crystals inside food is minimized by rapidly lowering a temperature of the food and passing the food quickly through a temperature zone of -5°C, called a zone of maximum ice crystal formation, leading to improved quality of frozen food, and many techniques have been developed.

Literatures by professional scholars also state that for the purpose of improving quality of food upon freezing, it is important to minimize the growth of ice crystals inside the food by rapidly lowering the temperature of the food and quickly passing the food through the zone of maximum ice crystal formation.

Additionally, methods for rapidly lowering a temperature of food are described, such as 1) increasing temperature difference between food and a heat transfer medium, 2) increasing a heat transfer coefficient between the food and the medium, and 3) increasing a contact surface area with the medium.

However, in order to preserve food quality during storage after freezing, simply improving cooling capacity to speed up the passage time through the zone of maximum ice crystal formation is not expected to be effective.

Water is the most abundant tissue component that constitutes food, and water is said to control the physical properties of food. Water in food is closely related to all of a form, texture such as color and luster, taste, mouthfeel, nutrient composition, etc. of the food. Furthermore, since water is also a medium that transmits various actions, it affects the quality at every stage: before freezing, during freezing, during frozen storage, during defrosting, and after defrosting. In high-quality freezing, the state after defrosting should be the same as or close to the state before freezing, and for this purpose, it is believed that the state and amount of moisture after defrosting should be the same as before freezing.

In order to achieve the above state, it is necessary to consider a fact that drawing heat from food to cool the food also removes moisture from the individual food. Therefore, the inventor came up with the idea of cooling food to a limit temperature zone where freezing does not occur in the food, and binding water in the food throughout a stage of a uniform temperature state of the whole food. Specifically, by keeping food at a temperature zone equal to or lower than 0.0°C, where the temperature is below the freezing point but freezing does not occur in the food, a proportion of a molecule containing an ice structure in the water contained in the food increases, resulting in an increased density and volume shrinkage. Then, at this temperature, by causing a phenomenon that the whole food becomes a uniform temperature, the water also has uniform specific gravity so that a binding force can be increased, thereby the water in the food can be bound.

Note that in the present description, the uniform temperature state of the whole food is referred to as a thermal equilibrium state. Additionally, even a state in which the whole food does not have uniform temperature but adjacent cells or the like have uniform temperature in a certain range may also be referred to as the thermal equilibrium state.

Here, mobility of moisture in solid food (binding of water in food, etc.) is determined by how long and at which temperature such state is maintained. Additionally, since volume change may also occur depending on the mobility of moisture, it is difficult to bind the water in the food. That is, it is difficult to create the thermal equilibrium state in the whole individual food. However, in a temperature zone from -0.5 to -1.0, it is possible to bind the water in the food. That is, in this temperature zone, it is possible to create the thermal equilibrium state in the whole individual food. The reason why it is possible to create the thermal equilibrium state in this temperature zone is that this temperature zone is within a temperature range that draws latent heat at the time of water turning into ice, and further ice crystals are not generated but ice molecules can be formed in the food moisture.

When the thermal equilibrium state occurs throughout the whole individual food, the individual food to be frozen can be considered as being gathered into one mass, which leads to improved thermal conductivity of the whole individual food. As a result, the individual food in the thermal equilibrium state as a whole can effectively accumulate coldness and hotness, thereby achieving uniform temperature without temperature error throughout the whole individual food.

In the tissue cooling device 1 of the present embodiment, the temperature inside the storage space 2h of the storage unit 2 can be maintained at an average temperature of about -0.75°C, for example. Under this temperature condition, for example, whole individual food such as melon can be kept at -0.5°C or lower, and thus the whole individual food can achieve the thermal equilibrium. Note that in a state that the whole individual food has achieved the thermal equilibrium, it can be considered that all of the inside of the storage space 2h of the storage unit 2 and the whole individual food are in the thermal equilibrium state.

Note that the thermal equilibrium of solid food is a matter of thermal conduction in the solid food, and depends on the constituents of the food, including carbohydrates and lipids. Accordingly, the temperature at which the thermal equilibrium occurs varies slightly depending on the species, quality, and properties of food. Therefore, in order to achieve the thermal equilibrium in the whole individual food, it is necessary to maintain the temperature inside the storage space 2h of the storage unit 2 in a temperature zone according to the individual food. Therefore, in a case of determining the temperature zone in which the individual food achieves the thermal equilibrium in advance by a preliminary test or the like, and cooling or storing the food, the control unit 10 may adjust the operation state of the cooling unit 3, i.e. the temperature of the second cold air supplied to the storage space 2h of the storage unit 2, etc. such that the temperature inside the storage space 2h of the storage unit 2 is in the temperature zone in which the individual food achieves the thermal equilibrium.

### <Storage Unit 2>

As described above, the storage unit 2 may have a structure including the outer wall, the inner wall, and the insulator made of a foam material or the like disposed between the outer wall and the inner wall. When a metal panel having a certain volume is used for the inner wall, the function of adjusting the temperature of the storage space 2h can be enhanced. That is, in a situation where the second cold air is being supplied, a temperature fluctuation range inside the storage space 2h can be maintained within a narrow range. For example, by forming the inner wall using an aluminum panel having a thickness of 1.5 mm or more, or installing an aluminum retrofit panel having a thickness of 1.5 mm or more on the inner wall, a temperature fluctuation reduction function of the member facing the storage space 2h (i.e. the inner wall or the retrofit panel) can be enhanced to reduce the temperature fluctuation range in the storage space 2h. Note that the member facing the storage space 2h is not particularly limited, and an aluminum panel (plate material), a stainless panel, or the like can be employed.

### <Heat Exchanger 6>

As described above, the adjustment substance supplied from the liquid distribution unit 9d to the first laminate structure 7 and the second laminate structure 8 may not be in a completely liquid state (i.e. the adjustment liquid only), but a part of which may contain the solidified mass formed from the adjustment liquid, or the whole adjustment substance may be solidified. When there is a possibility that the solidified mass is contained in the adjustment substance, the first laminate structure 7 and the second laminate structure 8 are preferably provided with storage spaces 7g, 8g for storing the solidified mass (see FIGs. 2B and 3). That is, it is desirable to dispose, in the first laminate structure 7 and the second laminate structure 8, the storage spaces 7g, 8g for storing the solidified mass contained in the adjustment substance supplied from the adjustment substance supply unit 9. By storing the solidified mass of the adjustment substance in the storage spaces 7g, 8g, it becomes easier to contact a plurality of the plate members 7a, 8a with the solidified mass. Then, when the adjustment substance contains the solidified mass, and the solidified mass of the adjustment substance is stored in the storage spaces 7g, 8g, the amount of heat that can be drawn from a plurality of the plate members 7a, 8a can be increased. Then, even in the case of supplying the gas at the environmental temperature to the second cooling unit 5, there is a possibility that a state capable of supplying the second cold air at the predetermined temperature can be continued for a relatively long time, leading to a possibility that the operation time of the first cooling unit 4 can be shorten and power consumption can be reduced.

For example, in the case that the first laminate structure 7 and the second laminate structure 8 are made of a plurality of the plate members 7a, 8a as described above, through holes 7c, 8c can be disposed in the respective plate members 7a, 8a such that the first laminate structure 7 and the second laminate structure 8 can be formed with the storage spaces 7g, 8g penetrating in the up-and-down direction.

Note that as described above, when the first laminate structure 7 and the second laminate structure 8 include the storage spaces 7g, 8g, the whole or most of the adjustment substance can also be supplied as the solidified mass to the first laminate structure 7 and the second laminate structure 8 by the cooling unit 9c of the adjustment substance supply unit 9. However, when the whole adjustment substance cooled by the cooling unit 9c of the adjustment substance supply unit 9 is in a liquid state or a liquid state with less proportion of the solidified mass, it is easier to control the amount and timing of supplying the adjustment substance to the first laminate structure 7 and the second laminate structure 8. Moreover, since the contact area between a plurality of the plate member 7a, 8a and the adjustment substance can be increased, it is easier to quickly perform heat exchange between a plurality of the plate member 7a, 8a and the adjustment substance.

Furthermore, a position and the number of the storage spaces 7g, 8g disposed in the first laminate structure 7 and the second laminate structure 8 are not particularly limited. Only one storage space 7g and one storage space 8g may be respectively disposed in the center of the first laminate structure 7 and the center of the second laminate structure 8 (see FIGs. 2B and 3), or a plurality of storage spaces 7g, 8g may be disposed in the first laminate structure 7 and the second laminate structure 8. In this case, upon respectively forming the first laminate structure 7 and the second laminate structure 8, the through holes may be provided to form a plurality of storage spaces 7g, 8g in a plurality of the plate members 7a, 8a that constitute the first laminate structure 7 and the second laminate structure 8.

Furthermore, although in the above example, described is the case of disposing a plurality of the first laminate structures 7 and a plurality of the first laminate structures 8, the number of the first laminate structure 7 and the number of the first laminate structure 8 to be disposed are not particularly limited. Only one first laminate structure 7 may be disposed, or one first laminate structure 7 and one first laminate structure 8 may be disposed.

Furthermore, the heat exchanger 6 may have a surface that is in contact with the gas supplied from the first cooler 4 and through which the adjustment substance can be flowed, and the shape thereof is not particularly limited. For example, a columnar member, a hollow cylinder, etc. may be employed for the heat exchanger 6. However, the structure including a plurality of plate members as described above can increase the contact area between the gas supplied from the first cooling unit 4 and a plurality of the plate members, allowing easier adjustment of the gas supplied from the first cooling unit 4 to form the second cold air at the target temperature.

Furthermore, a plurality of the plate members 7a constituting the first laminate structure 7 may not all have the same shape or thickness, and all of the spaces between the adjacent plate members 7a may be at equal intervals or at different intervals depending on the position. Similarly, a plurality of the plate members 8a constituting the second laminate structure 8 may not all have the same shape or thickness, and all of the gaps between the adjacent plate members 8a may be at equal intervals or different intervals depending on the position. However, when a plurality of the plate members 7a constituting the first laminate structure 7 and a plurality of the plate members 8a constituting the second laminate structure 8 all have the same shape and thickness, and all of the spaces between the adjacent plate members 7a and between the adjacent plate members 8a are the same, the gas supplied from the first cooling unit 4 can stably be adjusted to form the second cold air at the target temperature.

### <Tissue Cooling Device 1B of Present Embodiment Including Storage Chamber 20>

First of all, there was no conventional cooling devices or freezing devices capable of cooling the object to be cooled M in the thermal equilibrium state. Therefore, obviously, there was no device capable of cooling the object to be cooled M to the thermal equilibrium state and cooling the object to be cooled M to a predetermined temperature (for example, about -0.5°C) while maintaining the thermal equilibrium state, and thus the phenomenon as described above has not been recognized.

However, in the above-described tissue cooling device 1 of the present embodiment, the object to be cooled M can be cooled to the thermal equilibrium state and to the predetermined temperature (for example, about -0.5°C). Then, it has been confirmed that by cooling the object to be cooled M to the thermal equilibrium state and about -0.5°C and thereafter freezing the same, the object to be cooled M can be kept frozen for a long period of time while being maintained in the thermal equilibrium state, and even when the object to be cooled M is defrosted, the quality thereof can be restored to approximately the same as the state before freezing.

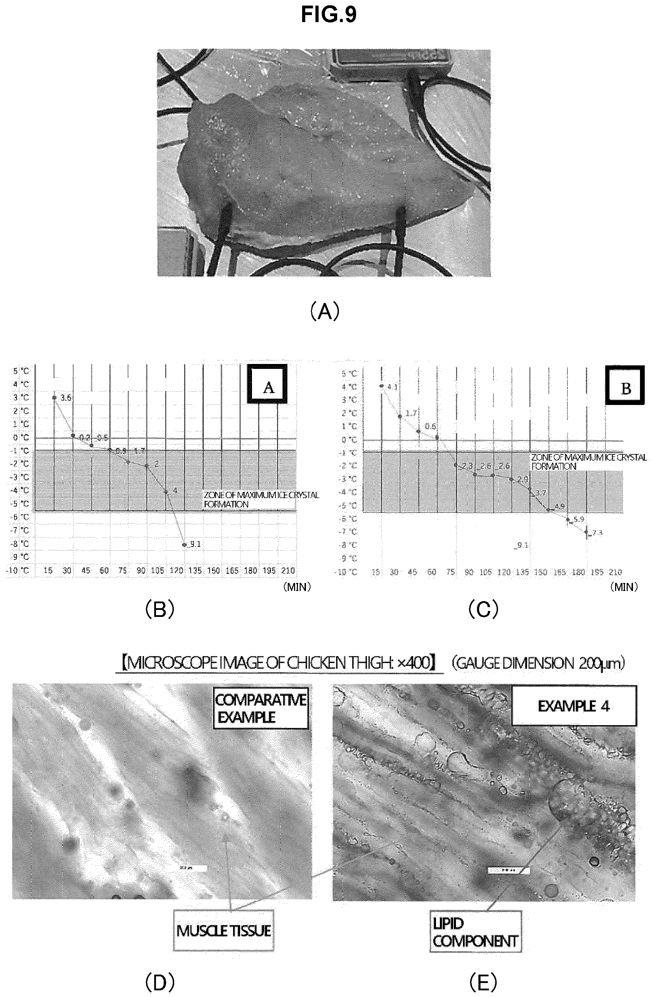

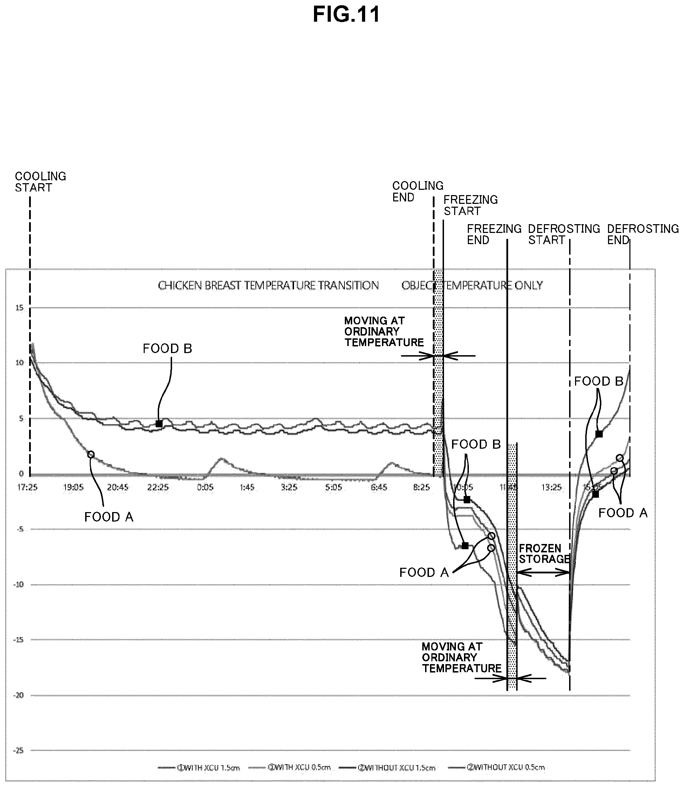

Specifically, in the case of cooling the object to be cooled M to the thermal equilibrium state and about -0.5°C by the tissue cooling device 1 of the present embodiment, it was confirmed that subsequent freezing can be performed in the maintained thermal equilibrium state as well as a temperature state lowered to a predetermined temperature even by using a previously existing common freezing method (see FIG. 11). It was also confirmed that even when the object to be cooled M cooled in the thermal equilibrium state is frozen by a common freezing method, the quality of the object to be cooled M after defrosting can be restored to approximately the same as the state before freezing (see FIG. 9).

That is, it was confirmed that when the object to be cooled M is cooled by the tissue cooling device 1 of the present embodiment and thereafter frozen, the quality of the defrosted object to be cooled M can be restored to approximately the same as the state before freezing regardless of freezing and defrosting methods.

As described above, even when the object to be cooled M that is cooled in the thermal equilibrium state by the tissue cooling device 1 of the present embodiment is frozen by using a common freezing method, the quality of the defrosted object to be cooled M can be approximately the same as the state before freezing. However, in view of further enhancing the quality of the object to be cooled M after defrosting, it is desirable that the tissue cooling device 1 of the present embodiment includes a storage chamber 20 as described later. That is, the object to be cooled M that is cooled in the storage space 2h of the storage chamber 2 of the tissue cooling device 1 of the present embodiment is preferably transferred to the storage chamber 20 as described later and stored there in a frozen state.

Hereinafter, the tissue cooling device 1B of the present embodiment including the storage chamber 20 will be described.

Note that the storage chamber 20 as described later can also be used alone. That is, it is also possible to provide the storage chamber 20 separately from the storage unit 2, and place and freeze, in this storage chamber 20, the object to be cooled M that is cooled in another device. In other words, the storage chamber 20 having a structure below can also be used as an independent freezing device for freezing the object to be cooled M.

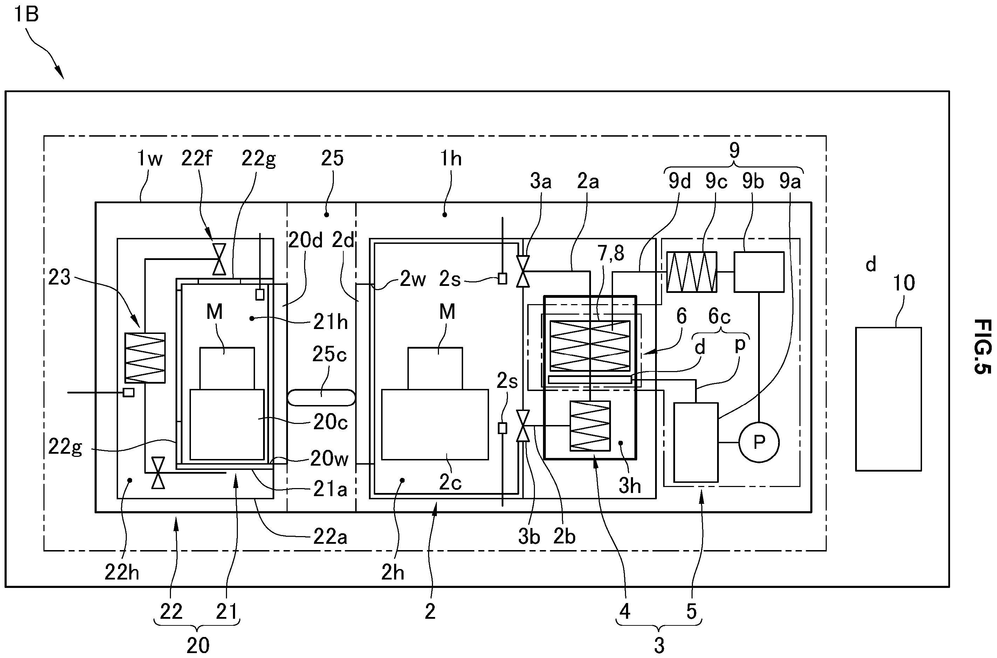

FIG. 5 illustrates the tissue cooling device 1B of the present embodiment, including the storage chamber 20.

Note that in the tissue cooling device 1B of the present embodiment in FIG. 5, all of the storage unit 2, the cooling unit 3, and the storage chamber 20 are housed in one chamber (a device chamber 1h in FIG. 5) surrounded by a device outer wall 1w. The tissue cooling device 1B of the present embodiment including the storage chamber 20 will be described based on the configuration of FIG. 5. However, in the tissue cooling device 1 of the present embodiment including the storage chamber 20, all of the storage unit 2, the cooling unit 3, and the storage chamber 20 are not necessarily housed in one chamber.

As illustrated in FIG. 5, inside the device chamber 1h surrounded by the device outer wall 1w, the storage chamber 20 is disposed adjacent to the storage unit 2. This storage chamber 20 is a chamber in which the object to be cooled M cooled in the tissue cooling device 1 is frozen and stored, and is capable of receiving the object to be cooled M cooled in the storage space 2h of the storage unit 2 and supplying the object to be cooled M from the storage chamber 20 to the storage space 2h of the storage unit 2.

Specifically, in the storage unit 2, a loading/unloading port 2w that communicates between the storage space 2h and a relay chamber 25 is disposed, and a heat-insulating door 2d that opens and closes the loading/unloading port 2w is disposed. Additionally, inside the storage space 2h, a carrier 2c such as a known conveyor to automatically carry in and out the object to be cooled M is disposed.

On the other hand, in the storage chamber 20, a loading/unloading port 20w that communicates between the relay chamber 25 and a storage space 21h of an inner shell chamber 21 is disposed, and a heat-insulating door 20d that opens and closes the loading/unloading port 20w is disposed. Additionally, in the storage space 21h of the inner shell chamber 21, a carrier 20c such as a known conveyor to automatically carry in and out the object to be cooled M is disposed. An upper surface of this carrier 20c, i.e. the surface on which the object to be cooled M is mounted, is formed at approximately the same level as an upper surface of the carrier 2c in the storage space 2h of the storage unit 2, i.e. the surface on which the object to be cooled M is mounted.

Additionally, between the storage unit 2 and the storage chamber 20, the relay chamber 25 surrounded by the device outer wall 1w is disposed. In this relay chamber 25, a lift carrier 25c that carries the object to be cooled M supplied from the storage unit 2 to the storage chamber 20 or vice versa is disposed. This lift carrier 25c is capable of moving up and down. When it moves up, an upper surface thereof, i.e. the surface on which the object to be cooled M is mounted, is at approximately the same level as the upper surfaces of the carrier 2c and the carrier 20c (this state is referred to as a carrying state). When it moves down, the upper surface thereof descends to a height not interfering with the opening and closing of the heat-insulating door 2d and the heat-insulating door 20d (this state is referred to as a retreat state).

With the configuration as described above, it is possible to move down the lift carrier 25c to the retreat state and open the heat-insulating door 2d and the heat-insulating door 20d, thereby communicating between the storage space 2h of the storage unit 2 and the storage space 21h of the inner shell chamber 21 of the storage chamber 20 via the relay chamber 25. In this state, by moving up the lift carrier 25c to the carrying state and operating the carrier 2c, the carrier 20c, and the lift carrier 25c, it is possible to move the object to be cooled M from the storage space 2h of the storage unit 2 to the storage space 21h of the inner shell chamber 21 of the storage chamber 20, or move the object to be cooled M from the storage space 21h of the inner shell chamber 21 of the storage chamber 20 to the storage space 2h of the storage unit 2.

Note that the timing to move the object to be cooled M from the storage space 2h of the storage unit 2 to the storage space 21h of the inner shell chamber 21 of the storage chamber 20 is not particularly limited. After the temperature of the object to be cooled M becomes equal to or lower than 0.00°C and the thermal equilibrium state in the storage space 2h of the storage unit 2, it may be transferred to the storage space 21h of the inner shell chamber 21 of the storage chamber 20. The timing at which the temperature of the object to be cooled M becomes equal to or lower than 0.00°C and the thermal equilibrium state varies depending on the shape, properties, etc. of the object to be cooled M. Accordingly, the timing to move may be determined based on the shape of the object to be cooled M, data obtained in a preliminary test or the like by measuring temperature fluctuation over time in the object to be cooled M, etc.

Furthermore, the method for carrying in and out the object to be cooled M between the storage space 2h of the storage unit 2 and the storage space 21h of the inner shell chamber 21 of the storage chamber 20 is not limited to the above method, and various methods can be employed. Additionally, without providing the carrier as described above, an operator may move the object to be cooled M by hand.

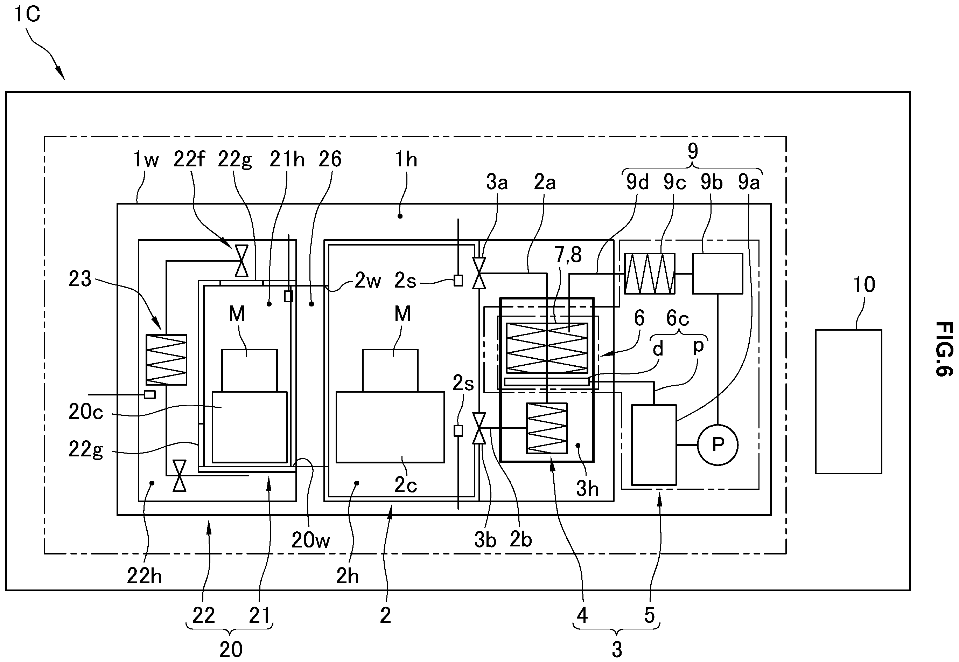

Furthermore, although in the above example, described is the case where the relay chamber 25 is disposed between the storage unit 2 and the storage chamber 20, the relay chamber 25 may not be disposed but an interrupter mechanism 26 may be disposed, which interrupts the communication between the loading/unloading port 2w of the storage unit 2 and the loading/unloading port 20w of the storage chamber 20 (see FIG. 6).

### <Storage Chamber 20>

As illustrated in FIG. 5, the storage chamber 20 is provided such that the object to be cooled M can be stored at a predetermined temperature or lower, specifically, at a temperature of -18°C or lower for frozen storage. This storage chamber 20 includes the inner shell chamber 21 that forms the storage space 21h as described above, and an outer shell chamber 22 surrounding this inner shell chamber 21.

### <Inner Shell Chamber 21>

The inner shell chamber 21 is configured with an inner wall 21a that is made of a material with high thermal conductivity, for example, a plate material made of stainless steel or aluminum, and includes inside thereof the storage space 21h surrounded by this inner wall 21a.

The outer shell chamber 22 is configured with a highly heat-insulating outer wall 22a that surrounds around the inner shell chamber 21. Between the outer wall 22a of the outer shell chamber 22 and the inner wall 21a of the inner shell chamber 21, a certain space (hereinafter referred to as a cold air holding space 22h) is formed. To this cold air holding space 22h, third cold air at a temperature equal to or lower than a target temperature inside the storage space 21h of the inner shell chamber 21 is supplied from a cooler 23. For example, when the target temperature inside the storage space 21h of the inner shell chamber 21 is -20°C, the third cold air adjusted to a temperature of -20°C or lower is supplied to the cold air holding space 22h. Note that a device for adjusting the third cold air is not particularly limited, and a known cold air generator can be used.

Additionally, in the cold air holding space 22h, a blower 22f configured to move the inside third cold air along the inner wall 21a is disposed, the blower 22f flowing the gas to uniformly contact the third cold air with an outer surface of the inner wall 21a. That is, by providing the blower 22f, the condition inside the cold air holding space 22h is adjusted such that the inner wall 21a has approximately the same temperature at any position.

As described above, since the third cold air at the temperature equal to or lower than the target temperature inside the storage space 21h of the inner shell chamber 21 is supplied to the space 22h between the inner wall 21a of the inner shell chamber 21 and the outer wall 22a of the outer shell chamber 22, the storage chamber 20 can maintain the environmental temperature inside the storage space 21h of the inner shell chamber 21 at the target temperature or lower. That is, once the third cold air at the target temperature or lower is supplied to the space 22h, the third cold air comes in contact with the outer surface of the inner wall 21a of the inner shell chamber 21, and the inner wall 21a of the inner shell chamber 21 is cooled by the third cold air. When the temperature of the inner wall 21a of the inner shell chamber 21 decreases, the temperature of the gas or the object to be cooled M inside the inner shell chamber 21 decreases due to radiation or heat transfer, so that the environmental temperature inside the storage space 21h of the inner shell chamber 21 can be decreased to the target temperature or lower, the object to be cooled M can be frozen, and the temperature thereof can be decreased to the same temperature as the environmental temperature in the frozen state. Moreover, because the third cold air is not directly supplied to the storage space 21h of the inner shell chamber 21 to lower the temperature, the third cold air does not come in contact with the object to be cooled M in the storage space 21h of the inner shell chamber 21. This makes it easier to maintain the thermal equilibrium state of the object to be cooled M, and can prevent excessive loss of moisture from the surface of the object to be cooled M, which is caused in the case of direct contact with the third cold air.

Additionally, since a material excellent in absorption and accumulation of cold air as well as thermal conductivity, such as aluminum, is used for the inner wall 21a of the inner shell chamber 21, stability of coldness and hotness retained in the storage space 21h, i.e. performance of maintaining the constant environmental temperature inside the storage space 21h, can be enhanced.

### <Vent 22g>

Note that when the third cold air is not directly supplied to the storage space 21h of the inner shell chamber 21 to lower the temperature, the effect as described above can be obtained. On the other hand, by directly supplying the third cold air to the storage space 21h of the inner shell chamber 21, the environmental temperature inside the storage space 21h can be quickly lowered close to the temperature of the third cold air, and the object to be cooled M can be directly cooled by the third cold air, thereby providing an advantage that the object to be cooled M can be quickly frozen. Hence, in a case that the quality of the object to be cooled M is not reduced even by directly applying the third cold air thereto, or in a case that the object to be cooled M is stored in a container so as not to be directly exposed to the third cold air, the third cold air may be allowed to be appropriately supplied from the space 22h to the storage space 21h. For example, an openable/closable vent 22g may be disposed in the inner wall 21a of the inner shell chamber 21, and the vent 22g may be opened or closed according to the temperature inside the storage space 21h or the object to be cooled M.

### <Defrosting>

First of all, when foods are cooled by the tissue cooling device 1 of the present embodiment and thereafter frozen, water and other nutrients in the frozen individual food can be in a condition according to tissue composition similar to the state before freezing in a temperature rise process, regardless of a defrosting method. That is, when foods are cooled by the tissue cooling device 1 of the present embodiment and thereafter frozen, the environment inside the tissue of the defrosted foods can be in a stable state approximately equivalent to the state before freezing, regardless of a defrosting method.

On the other hand, the tissue cooling device 1 of the present embodiment can maintain the object to be cooled M stored in the storage space 2h of the storage unit 2 at the predetermined temperature. This also makes it possible to keep the internal temperature of the frozen object uniform while quickly raising the temperature thereof, which is lower than the environmental temperature inside the storage space 2h, to about the environmental temperature inside the storage space 2h. That is, the tissue cooling device 1 of the present embodiment can also be used as a defrosting device that raises the temperature of all low-temperature stored items, including foods kept frozen, living things, and cooked and processed foods, to a temperature very close to the freezing point of 0°C or lower while maintaining uniform temperature distribution.

Specifically, with the tissue cooling device 1 of the present embodiment, it is possible to quickly raise the temperature of stored items such as foods stored at -18°C or lower or foods stored at an ultralow temperature of -50°C or lower from a frozen storage state to the environmental temperature inside the storage space 2h while keeping the internal temperature thereof uniform. Moreover, even when the stored item subjected to the temperature rise is food, the individual item temperature can be adjusted uniformly throughout the surface layer to the center. Note that "uniform" as described herein means that temperature difference between each part is equal to or less than ±0.3°C.

Since the tissue cooling device 1 of the present embodiment has such function, decrease in quality during defrosting can be prevented even in foods frozen by using a common freezing device. The reason for this will be described below.

Firstly, when foods are frozen by using a common freezing device, solid expansion occurs due to solidification of moisture during freezing, and when foods frozen by using a common freezing device are defrosted by using a common defrosting device, frozen moisture content in the foods begins to flow out of the foods simultaneously with its melting. That is, dripping occurs. For example, in a case of a 10 kg block of beef, if the center temperature reaches -5°C during temperature rise, a surface temperature will become 0°C or higher, causing dripping from the beef.

However, in the tissue cooling device 1 of the present embodiment, the environmental temperature inside the storage space 2h of the storage unit 2 can be maintained at an average temperature of about -0.75°C based on a temperature equal to or lower than a freezing point, so that the temperature of the whole individual food can be uniformly adjusted and raised. That is, with the tissue cooling device 1 of the present embodiment, the temperature of the whole individual food can be raised to around -0.8°C, which is close to 0°C. Then, water hardly melts in the food and the temperature of the whole individual food can be raised uniformly. Accordingly, defrosting by the tissue cooling device 1 of the present embodiment can prevent dripping from occurring even in foods frozen by using a common freezing device, and prevent decrease in quality of the foods during defrosting.

As described above, defrosting by the tissue cooling device 1 of the present embodiment enables to suppress occurrence of dripping, not only in foods cooled by the tissue cooling device 1 of the present embodiment and thereafter frozen, but also in frozen foods not cooled by the tissue cooling device 1 of the present embodiment, and enables the environment inside the tissue of the defrosted foods to be close to the state before freezing. That is, even in foods frozen in a general manner, defrosting by the tissue cooling device 1 of the present embodiment enables to suppress occurrence of dripping, and make the environment inside the tissue of the defrosted foods close to the state before freezing. For example, actions on human five senses, such as color, taste, and texture, of the defrosted foods can be restored approximately to the same as before the foods are frozen.

Particularly, by defrosting foods that are cooled using the tissue cooling device 1 of the present embodiment and thereafter frozen, it is possible to obtain more excellent effects on an aging (maturing) process of large fish and meat, which has become a hot topic in fresh foods recently. Foods cooled by the tissue cooling device 1 of the present embodiment and thereafter frozen have uniform temperature throughout the foods, and the temperature of the whole foods can be raised uniformly. As a result, upon defrosting, moisture in the individual food does not flow and enzyme reaction of its own slowly proceeds. This alleviates problems such as discoloration of the individual food, increase or decrease in the moisture, and proliferation of heterogeneous fungi, and also provides favorable effects such as improved heating yield.

### EXAMPLE

It has been confirmed that with the tissue cooling device of the present invention, an object to be cooled can be cooled to a predetermined temperature, and further the inside of the object to be cooled can have uniform temperature.

In experiments, a device having the following specification was used as the tissue cooling device.

1) First laminate structure (3 units)
   Height: H1=395 mm
   Height: H2=8 mm
   Plate member: made of aluminum, thickness of 5 mm
      L1=43 mm, R1=98 mm, R2=50 mm (see FIG. 3B)
2) Second laminate structure (3 units)
   Height: H1=395 mm
   Height: H2=8 mm
   Plate member: made of aluminum, thickness of 5 mm
      L1=43 mm, R1=98 mm, R2=50 mm (see FIG. 3B)

Note that a distance D between the first laminate structure and the second laminate structure adjacent to each other equals 165 mm (see FIG. 3B), and a projected area as viewed from the supply side of the first cold air is about 117,100 mm².

3) First cold air: -3°C on average
4) Second cold air: average target temperature of -0.75°C, average flow rate inside the storage space of 3 m/s
5) Storage unit:
   Volume inside the storage space: 3.47 m³ (height: 1885 mm, width: 1535 mm, depth: 1200 mm)
   Heat insulation: heat-insulating structure (6 planes) with thermal conductivity of 0.04 W/(mk)

### <Example 1>

In Example 1, it was verified whether the tissue cooling device of the present invention can accomplish uniform thermal equilibrium in a liquid at a temperature of -5 to 50°C, that is, whether the whole liquid can be cooled to the same temperature.

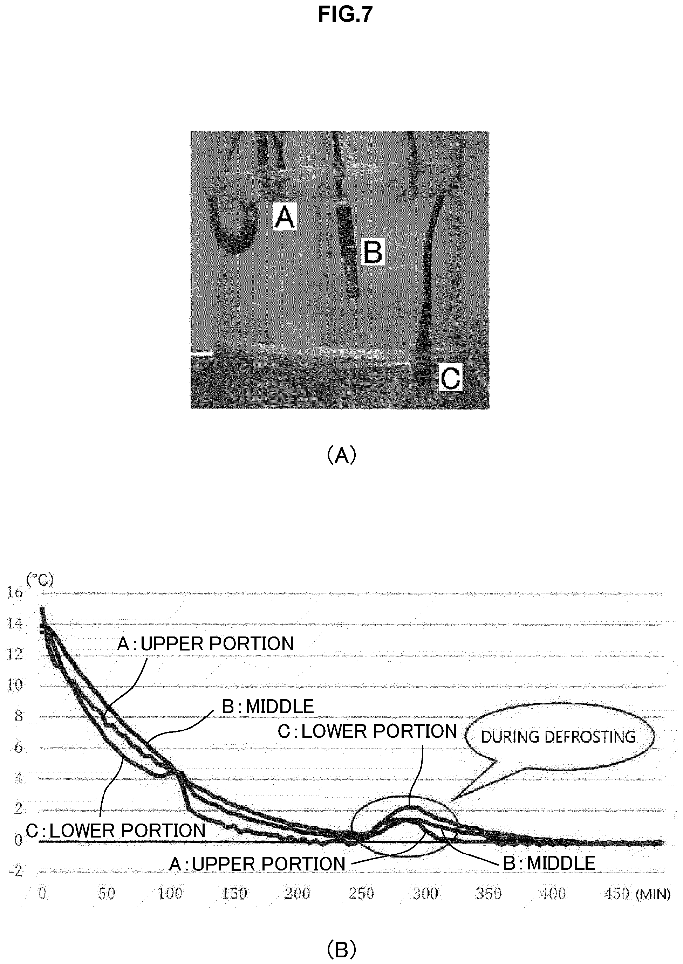

In Example 1, 2 liters of tap water was placed into a glass beaker (volume: 2 liters, body diameter × total height: φ135 × 200 mm) in the storage space of the storage unit, and the water was cooled by the tissue cooling device of the present invention. The temperature of the tap water was measured at 3 points below, using a temperature data logger (produced by Fujita Electric Works, Ltd.: Model No. KT-255FP) (FIG. 7A).
A: upper portion (near the surface layer of water, 25 mm from the upper end of the beaker)
B: middle (near the center, 65 mm from the upper end of the beaker)
C: lower portion (near the bottom, 135 mm from the upper end of the beaker)

As shown in FIGs. 7B and 7C, in the experiment, cooling was started from a water temperature of 15°C. After the cooling time of about 200 minutes passed, the three data loggers showed a maximum temperature error of 1°C, and after 260 minutes passed, the three data loggers showed approximately the same temperature (maximum temperature error of 0.1°C). This demonstrated that the water was cooled to the stable temperature in the temperature zone (i.e. 0.1°C) set by the tissue cooling device of the present invention.

According to the above results, it was confirmed that by using the tissue cooling device of the present invention, it is possible to create thermal equilibrium without the temperature error due to the position within the water depth range (within 155 mm) even under conditions difficult to control temperature, such as using air with low thermal conductivity and cooling water through a glass container with low thermal conductivity.

### <Examples 2 and 3>

In Examples 2 and 3, it was verified whether uniform thermal equilibrium can be accomplished also in food, that is, whether the whole food can be cooled to the same temperature.

In Example 2, pork butt was placed in the storage space of the storage unit and cooled, and a process of temperature change of the pork butt was confirmed. The weight of the used pork butt was a little over about 2 kg, and a minimum width thereof was about 100 mm. Three data loggers were attached to this pork butt and the temperature change thereof was confirmed.

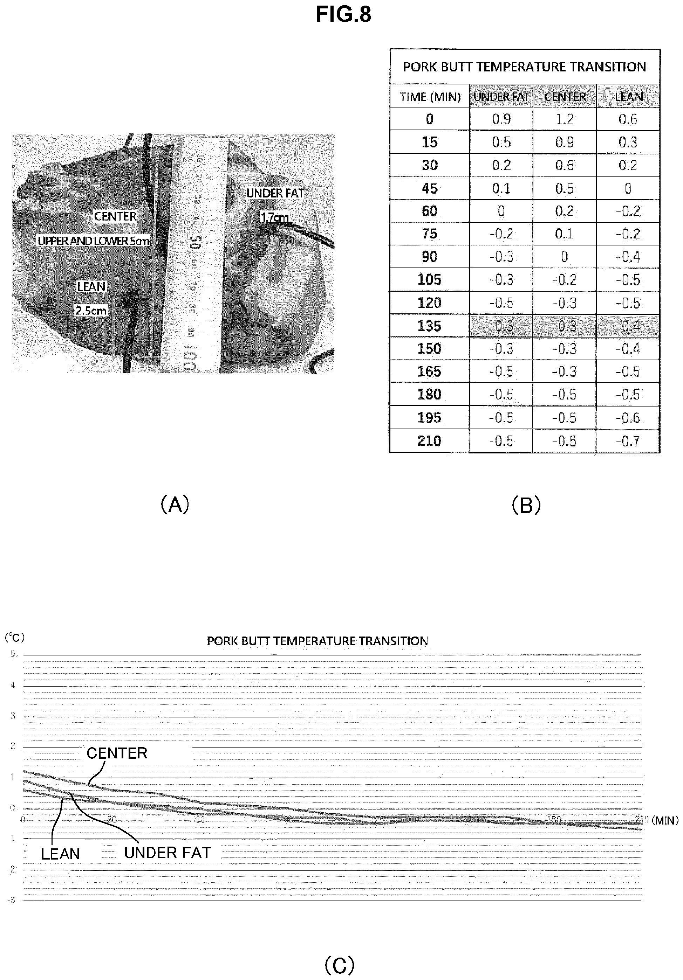

The temperature of the pork butt was measured at 3 points below, by inserting a temperature detection needle (length of about 50 mm) of the temperature data logger (produced by Fujita Electric Works, Ltd.: Model No. KT-255FP) into the pork butt (FIG. 8A).
1) center of pork butt (about 50 mm inside from the surface)
2) lean of pork butt (about 25 mm inside from the surface)
3) under fat of pork butt (about 17 mm inside from the surface)

In Example 3, chicken breast was placed in the storage space of the storage unit and cooled, and a process of temperature change of the chicken breast was confirmed. The used chicken breast was breast of broiler, and the weight thereof was 316 g. Note that the breast of broiler contains moisture (72%), protein (21%), lipid (6%), and small amounts of minerals and vitamins according to Standard Tables of Food Composition in Japan.

The temperature of the chicken breast was measured at 2 points below, by inserting the temperature detection needle (length of about 50 mm) of the temperature data logger (produced by Fujita Electric Works, Ltd.: Model No. KT-255FP) into the chicken breast (see FIG. 9A).
A: Center part of the chicken breast with a thickness of 20 mm
B: Center part of the chicken breast with a thickness of 40 mm

As shown in FIGs. 8B, 8C, it was confirmed that the temperature difference was small in the pork butt throughout the cooling period, and the temperature was almost uniform in 2 kg of the whole pork butt (i.e. from the surface to the center) in the temperature zone where no freezing occurred. Moreover, it was confirmed that the pork butt was maintained at temperature equal to or lower than the freezing point.

As shown in FIGs. 9B, 9C, no temperature stagnation in the chicken breast was observed in both positions A and B, and the temperature quickly and sequentially decreased to the target temperature along the thermal conduction within the individual. That is, it can be seen in the chicken breast that the temperature equally and quickly decreased regardless of the different thickness (in other words, the different distance from the surface).

According to the above results, it was confirmed that by using the tissue cooling device of the present invention, it is possible to eliminate the temperature error due to the position even in food to create the thermal equilibrium state inside the food, and maintain the food in the thermal equilibrium state at a predetermined temperature; and it is also possible to quickly lower the temperature to the predetermined temperature.

### <Example 4>

In Example 4, it was confirmed that freezing after cooling by the tissue cooling device of the present invention enables to keep quality of food, and defrosting by the tissue cooling device of the present invention enables to keep the quality even after defrosting.

In Example 4, chicken thigh was placed in the storage space of the storage unit of the tissue cooling device of the present invention, cooled and then frozen. Thereafter, the chicken thigh was defrosted in the storage space of the storage unit of the tissue cooling device of the present invention, and the condition of the chicken thigh was confirmed. The condition of the chicken thigh was confirmed by cutting the chicken thigh before freezing and the chicken thigh frozen and then defrosted, and observing the cross section thereof by a microscope.

As a comparative example, chicken thigh at ordinary temperature was frozen in a common freezer, and then defrosted in a usual manner. The chicken thigh was cut and the cross section thereof was observed by a microscope.

The results are shown in FIGs. 9D and 9E.

It is believed that since the thigh meat of chicken contains skin and subcutaneous fat contents of 30% or more and further the large amount of unsaturated fatty acids, oxidation proceeds faster. Therefore, it is believed that chicken thigh has a greater deterioration rate than chicken breast, and generally, when it is frozen, the emulsified structure thereof is physically destroyed due to volume expansion caused by phase change of moisture in the food and crystallization of oils and fats, causing partial separation and change in taste from before freezing.

As shown in FIG. 9D, it was confirmed in the comparative example that freezing in a usual manner caused change and destruction in an emulsified state of lipid, and the lipid components flowed out. Such change causes oxidation and change in texture of the thigh meat.

On the other hand, as shown in FIG. 9E, it can be seen in Example 4 that the chicken thigh has a large muscle tissue and a large amount of lipid components remains. That is, in Example 4, it can be seen that even after defrosting, the chicken thigh can be maintained in almost the equivalent state to that before freezing.

According to the above results, it was confirmed that even food can maintain its quality before and after freezing by using the tissue cooling device of the present invention.

### <Example 5>

In Example 5, it was confirmed that by cooling food with the tissue cooling device of the present invention and then freezing the food, it is possible to freeze the food while maintaining the thermal equilibrium state even by using a common freezing device.

In Example 5, into the storage space of the storage unit of the tissue cooling device of the present invention maintained at the environmental temperature of -0.75°C on average, sweet potato (Narutokintoki) having approximately the same thermal conductivity as water was placed, cooled to the thermal equilibrium state, and then frozen to -18°C by a freezing device to observe the temperature change inside the sweet potato.

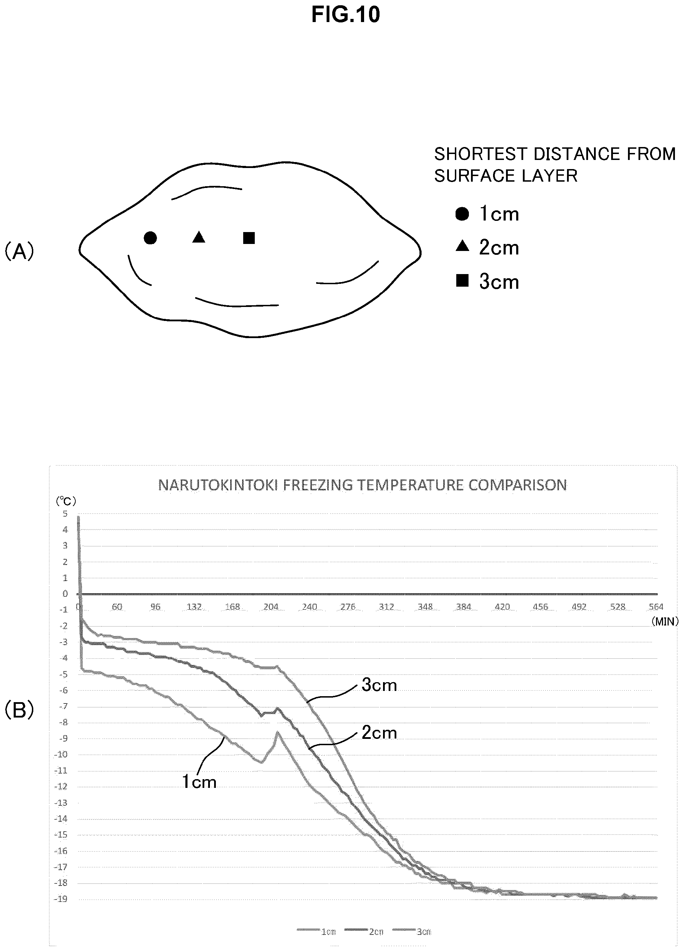

The temperature inside the sweet potato was measured at 3 points, respectively 10 mm, 20 mm, and 30 mm from the surface layer, by inserting the temperature detection needle (length of about 50 mm) of the temperature data logger (produced by Fujita Electric Works, Ltd.: Model No. KT-255FP) into the sweet potato (see FIG. 10A).

The results are shown in FIG. 10B.

As shown in FIG. 10B, when freezing was started, the temperature of the sweet potato decreased to low temperature slightly faster in the position near the surface layer, but maximum temperature difference between the adjacent temperature measurement positions was at most 3°C. Moreover, the temperatures at three points decreased almost in the same manner, and the whole was at -18°C after 6 hours. According to this result, it can be seen that the inside of the sweet potato was in the thermal equilibrium state in the storage space of the storage unit. Accordingly, even when the sweet potato is stored in the storage chamber at the environmental temperature of -18°C on average, the temperature thereof can be lowered to the environmental temperature with its inside in an almost uniform temperature state.

Note that in FIG. 10B, the temperature of the sweet potato at the start of freezing was about 4 degrees, because the sweet potato was in contact with the outside air when moved from the inside of the storage space of the storage unit to the freezing device. However, even when the temperature increased to about 4 degrees, the temperature difference between the positions of the sweet potato at the start of the freezing was within 0.5°C at the three points, and the temperature decreased to 0°C or lower at any of the points within a few minutes from the start of the freezing and thereafter underwent the temperature change as described above. This can be considered as a proof that in the storage space of the storage unit, the sweet potato was in the thermal equilibrium state and the thermal equilibrium state was maintained for a certain period of time.

### <Example 6>

In Example 5, it was confirmed that by freezing food cooled by the tissue cooling device of the present invention, it is possible to freeze the food while maintaining the thermal equilibrium state, and further, even when naturally thawing the food after freezing, it is possible to thaw the food while maintaining the thermal equilibrium state. Note that the freezing was performed in a common freezer.

In the experiment, chicken breast was used. The chicken breast was cooled by the tissue cooling device of the present invention and then frozen in a common freezer. The frozen chicken breast was placed in a storage and stored at -20°C. Thereafter, the chicken breast was taken out from the storage and thawed naturally at ordinary temperature. During this operation, temperature fluctuation inside the chicken breast over time was measured. The temperature fluctuation inside the chicken breast over time was measured using the temperature detection needle (length of about 50 mm) and the temperature data logger (produced by Fujita Electric Works, Ltd.: Model No. KT-255FP). The temperature was measured at two points respectively 5 mm and 15 mm from the surface layer of the chicken breast, using the temperature detection needle.

As comparison, the temperature fluctuation inside chicken breast over time was measured in the same manner, except that the chicken breast was refrigerated in a common refrigerator.

The results are shown in FIG. 11.

Note that when the chicken breast was moved from the tissue cooling device of the present invention or the common refrigerator to the freezer, and when the chicken breast was moved from the freezer to the storage, it was not particularly cooled and was moved in the outside air at ordinary temperature. This temporarily caused temperature rise during moving the chicken breast in FIG. 11.

As shown in FIG. 11, in the food cooled by the tissue cooling device of the present invention (food A in FIG. 11), the temperatures at two points of 5 mm and 15 mm were almost uniform from the start of the cooling to the end of the defrosting, and were confirmed to be within 2°C at most.

On the other hand, in the comparison, temperature difference between the two points of 5 mm and 15 mm was relatively small from the start of the cooling to the start of the freezing. However, once the freezing was started, the temperature difference of 5°C or greater occurred. When the freezing was completed, the temperature difference between the two points became small, but when defrosting was started, the difference became large and the temperature difference of almost 9°C was caused at the end of the defrosting.

As described above, it was confirmed that cooling of food by the tissue cooling device of the present invention can make the temperature inside the food uniform when freezing and then defrosting the food, regardless of freezing and defrosting methods.

### <Example 7>

In Example 7, it was confirmed that the tissue cooling device of the present invention can achieve the thermal equilibrium state even in a relatively heavy and large object.

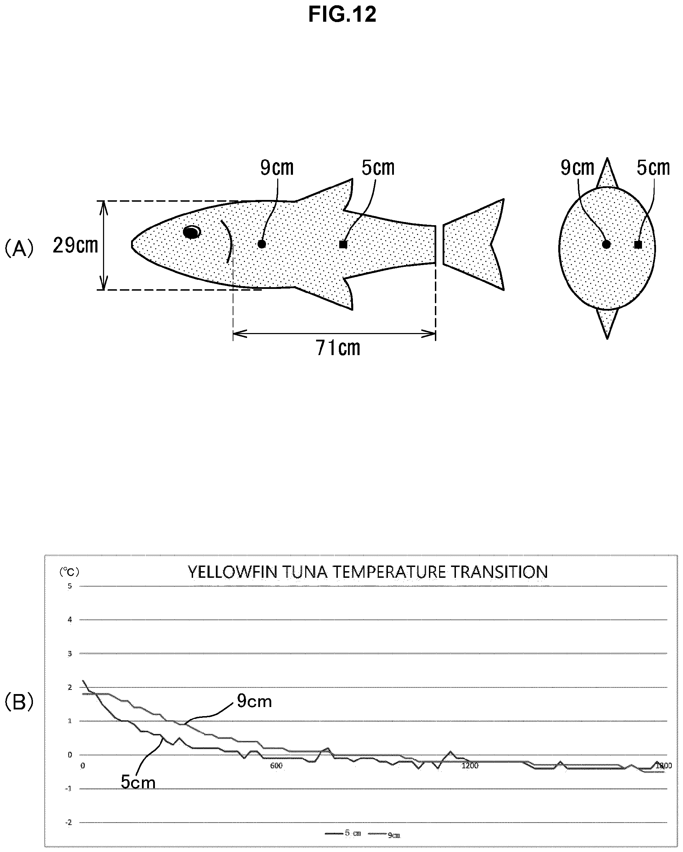

In Example 7, into the storage space of the storage unit of the tissue cooling device of the present invention maintained at the environmental temperature of -0.75°C on average, 26 kg of yellowfin tuna (see FIG. 12A) was placed and cooled to the thermal equilibrium state, and the temperature change on this occasion was observed. The temperature inside the yellowfin tuna was measured at two points respectively 5 cm and 9 cm from the surface layer, by inserting the temperature detection needle (length of about 50 mm) of the temperature data logger (produced by Fujita Electric Works, Ltd.: Model No. KT-255FP) into the yellowfin tuna (see FIG. 12A).

The results are shown in FIG. 12B.

As shown in FIG. 12B, it was confirmed that there was temperature difference of about 1°C between the two measurement points of 5 cm and 9 cm for a certain period of time after the cooling was started, but the temperature difference between the two measurement points became smaller over time, and the temperatures at the two measurement points eventually reached almost the same temperature.

As described above, it was confirmed that with the tissue cooling device of the present invention, it is possible to create a uniform internal temperature state even in a relatively large and heavy object.

### <Example 8>

In Example 8, it was confirmed that by installing an aluminum panel (thickness of 1 mm) on the inner surface of the storage space of the tissue cooling device of the present invention, it is possible to reduce the range of temperature fluctuation in the storage space. In the experiment, the environmental temperature inside the storage space was controlled to be -0.3°C on average with no object placed on the inner surface of the storage space, and the temperature fluctuation inside the storage space was measured.

As comparison, the environmental temperature inside the storage space was controlled to be -0.3°C on average without installing an aluminum panel, that is, with the inner surface of the storage space being exposed, and the temperature fluctuation inside the storage space was measured.

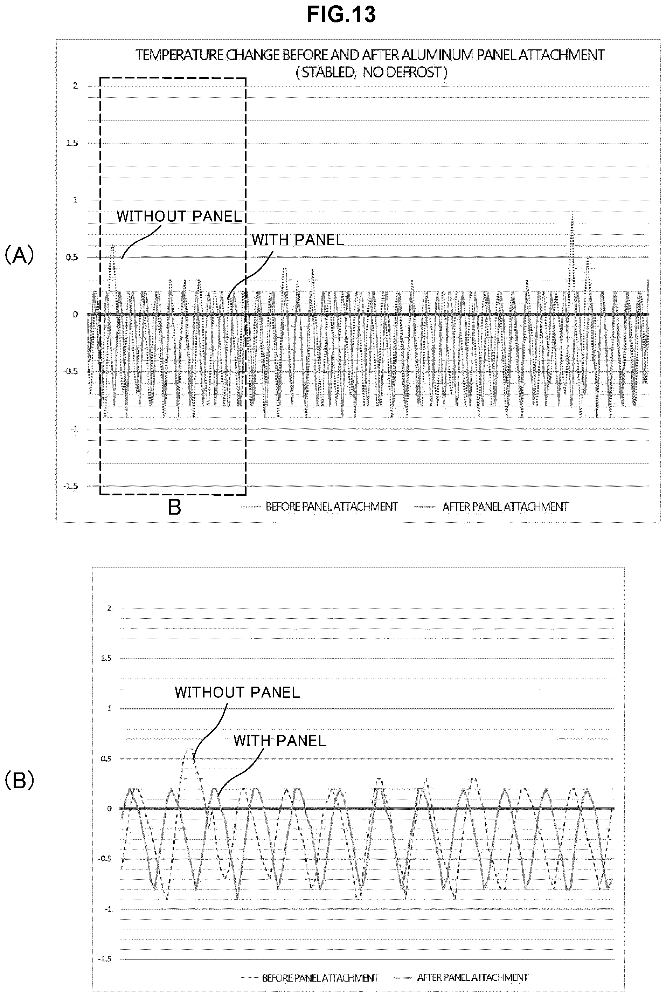

The results are shown in FIG. 13.

As shown in FIG. 13, it can be seen that even without installing an aluminum panel, the fluctuation of the environmental temperature can be kept almost within 1°C, but significant temperature fluctuation suddenly occurred (a situation where difference from the target temperature was 1°C or more), resulting in the large fluctuation range.

On the other hand, it can be seen that when the aluminum panel was installed, there was the temperature fluctuation but no sudden significant temperature fluctuation, and the overall difference from the target temperature was kept within ±0.6°C.

As described above, it was confirmed that with the tissue cooling device of the present invention, it is possible to stably maintain the environmental temperature inside the storage space within a narrow range by installing an aluminum panel on the inner surface of the storage space.

### INDUSTRIAL APPLICABILITY

The tissue cooling device of the present invention is suitable as a storage device for storing an object to be cooled, such as fresh food or other foods and medical organs, at proper temperature.

### REFERENCE SIGNS LIST

1: tissue cooling device
2: storage unit
2h: storage space
2a: supply channel
2b: exhaust channel
2w: loading/unloading port
3: cooling unit
3a: second blower
3b: first blower
4: first cooler
5: second cooler
6: heat exchanger
7: first laminate structure
7a: plate member
7c: through hole
7g: storage space
8: second laminate structure
8a: plate member
8c: through hole
8g: storage space
9: adjustment substance supply unit
9a: undiluted solution supply unit
9b: mixing unit
9c: cooling unit 9
9d: liquid distribution unit
10: control unit
20: storage chamber
20a: loading/unloading port
9d: liquid distribution unit
10: control unit
20: storage chamber
20a: loading/unloading port
21: inner shell chamber
21a: inner wall
21h: storage space
22: outer shell chamber
22a: outer wall
22h: space
M: object to be cooled

## Claims

1. A tissue cooling device, comprising:
a first cooler having a function of generating first cold air; and
a second cooler to which gas is supplied from the first cooler, the second cooler adjusting the gas to form second cold air,
wherein the second cooler comprises:
a heat exchanger having a surface to be in contact with the gas supplied from the first cooler; and
an adjustment substance supply unit configured to supply an adjustment substance for adjusting a temperature of the heat exchanger to the surface of the heat exchanger to be in contact with the gas supplied from the first cooler,
wherein the adjustment substance supplied from the adjustment substance supply unit has a freezing point higher than a temperature of the first cold air.

2. The tissue cooling device according to claim 1, wherein the adjustment substance is alkaline water.

3. The tissue cooling device according to claim 1 or 2, comprising a blower configured to supply the gas from the first cooler to the second cooler,
wherein the heat exchanger is a laminate structure formed by arranging a plurality of plate members parallel to and spaced apart from each other, and
the blower is disposed to supply the gas from the first cooler to a space between the adjacent plate members of the heat exchanger.

4. The tissue cooling device according to claim 3,
wherein the laminate structure of the heat exchanger comprises:
a first laminate structure comprising a plurality of plate members formed to have a decreasing width toward a side to which the gas is supplied from the first cooler; and
a second laminate structure comprising a plurality of plate members formed to have an increasing width toward the side to which the gas is supplied from the first cooler,
wherein the first laminate structure and the second laminate structure are alternately arranged in line along a direction intersecting with a supply direction of the gas from the first cooler to the heat exchanger.

5. The tissue cooling device according to claim 1, comprising:
a storage unit comprising a space to which the second cold air is supplied; and
an exhaust channel configured to supply gas inside the storage unit to the first cooler.

6. The tissue cooling device according to claim 1, comprising a storage unit comprising a space to which the second cold air is supplied,
wherein the storage unit comprises an inner wall made of an aluminum material.

7. The tissue cooling device according to claim 5 or 6, comprising a storage chamber that can be communicated and interrupted with/from the storage unit,
wherein the storage chamber comprises:
an inner shell chamber coupled to the space inside the storage unit so as to be communicated and interrupted therewith/ therefrom, the inner shell chamber comprising an interior space that is adjusted to a lower temperature than the space inside the storage unit;
an outer shell chamber surrounding the inner shell chamber with a space between the inner shell chamber and the outer shell chamber; and
a third cold air supply unit configured to supply third cold air to the space between the inner shell chamber and the outer shell chamber, the third cold air having a temperature equal to or lower than a target temperature of the interior space of the inner shell chamber,
wherein the inner shell chamber comprises an inner wall made of a material with high thermal conductivity.

8. The tissue cooling device according to claim 7,
wherein the inner shell chamber comprises a vent configured to interrupt communication between the interior space and the space between the inner shell chamber and the outer shell chamber.
